# EUROPEAN PATENT APPLICATION

(11) **EP 4 023 322 A1**
(43) Date of publication of application: **06.07.2022**
(21) Application number: 21216995.7
(22) Date of filing: 22.12.2021
(51) Int. Cl.: B01D 53/22

(54) **FOUR STAGE MEMBRANE GAS SEPARATION WITH COOLING AND USE OF SWEEP GAS**

(30) Priority: 31.12.2020 US 202017139062
(71) Applicant: L'Air Liquide, société anonyme pour l'Étude et l'Exploitation des procédés Georges Claude, 75007 Paris (FR)
(72) Inventor: MYRICK, Gregory, Wilmington, DE (US)
(74) Representative: Air Liquide

(57) **Abstract**

Separation of a gas mixture comprising first and second gases may be improved using four stages of gas separation membrane modules that includes the additional techniques of cooling the feed gas stream that is fed to the first (feed) stage and using a portion of the fourth (second permeate) stage retentate as a sweep gas on the permeate stage.

## Description

### Background

### Field of the Invention

The present invention relates to a gas separation membrane-based system and method for purification of a gas mixture with improved membrane count/surface area.

### Related Art

Gas separation membranes have long been used to separate a mixture of first and second gases into a product gas enriched in the first, valuable, gas and a vent gas enriched in the second, typically not as valuable, gas. In particular, the physical and chemical properties of the first and second gases and the material properties of the membrane (especially the separation layer of the membrane) are of primary importance in determining the fluxes of the first and second gases across the membrane.

A particularly desirable separation is one in which the flux of one of the gases (such as the second gas) across the membrane is much higher than that of the other of the gases (such as the first gas). The membrane in this case is said to be selective for the second gas over the first gas. The flux of the second gas across the membrane through permeation is affected by the difference in the partial pressure (i.e., the partial pressure difference) of the second gas across the membrane. The flux (or driving force of the membrane) goes up with an increased partial pressure difference while the converse is also true.

The partial pressure difference may be increased by increasing feed gas pressure while maintaining the permeate pressure at the same level. While this may be a satisfactory solution for some separations, this requires a greater amount of compression and thus increases the operating expense for such a system. With the exception of gases having very low inversion temperatures, such as hydrogen and helium, the relatively greater amount of Joule-Thomson cooling caused by this greater partial pressure difference can result in undesirable cooling of the membrane and potentially condensation of condensable components of the gas mixture on the feed side of the membrane. For a system in which the feed gas pressure is fixed and the permeate gas pressure is controlled, the permeate pressure may be lowered. While this may be a satisfactory solution for some separations, this results in a lower pressure permeate gas that may need to be recompressed in order to reach the desired pressure level. Similar to increasing the feed pressure (as explained above), this may result in an undesirable level of cooling of the membrane and potential condensation of condensable components on the feed side of the membrane.

Another way to increase the flux of a gas (such as the second gas) across the membrane is to introduce a sweep gas on the permeate side of the membrane. Assuming that the permeate pressure is controlled, introduction of the sweep gas into the permeate side of the membrane results in dilution of the permeated gas (on the permeate side), thereby lowering its partial pressure. Typically, the sweep gas is an inert gas.

Some have proposed the use of an amount of the retentate gas, which is enriched in the first gas, as a sweep gas. Currently, this type of sweep gas is being used in a multi-stage process in an effort to improve the productivity of the stage being swept. The benefit of doing this is a reduced capital expenditure by reducing the number of membranes that are required for achieving the desired separation. For multi-stage processes in which the permeate of a stage is vented, the stage from which the permeate is vented is not swept. This is because, if a portion of the valuable first gas from the retentate is used as a sweep gas, the amount of the first gas used as the sweep gas would be vented (along with the second gas-enriched gases that permeated across the membrane of that stage) instead of being recovered in the product gas. With this in mind, the use of a portion of retentate gas as a sweep is only applied to the second stage of a two stage process, the first and/or second stage of a three stage process, and the first, second, and/or third stage of a four stage process.

Even when skilled artisans avoid sweeping a stage of a multi-stage produce when that stage produces permeate that is vented, when a portion of the retentate is used as a sweep gas, there is still an amount (-3-7 vol%) of the valuable first gas that winds up in the permeate of the stage that is swept. While that amount of the first gas is recovered by recycling the permeate gas of the stage being swept back to the suction inlet of the compressor upstream of the first stage, this slightly increases the amount of the gas being recycled. As a result, the operating expense of such a membrane separation scheme is increased due to the increased need for compression energy for the additional amount of recycle gas.

Therefore, there is a need to increase the flux of a gas through a gas separation membrane without resulting in increased compression costs, excessive membrane cooling, condensation of condensable components of a gas mixture on a membrane, or decreased recovery as has been experienced with conventional gas separation membrane schemes.

Apart from efforts to increase the driving force of the membrane by manipulating the partial pressure difference across the membrane, some have proposed to modify the selectivity and flux of a membrane by changing the operating temperature of the membrane or the temperature of the feed gas. With some exceptions for certain combinations of gas mixtures and gas separation membrane materials, a lower temperature will increase selectivity (expressed as a ratio of the permeability of the second gas to the permeability of the first gas), while at the same time, decrease flux of the second gas across the membrane. On the other hand, a higher temperature will decrease selectivity while at the same time increase flux. Because an ideal separation is characterized by both a high selectivity and a high flux, outside of certain niche applications, manipulating the membrane or feed gas temperature has not shown itself to be a satisfactory way of improving gas separations using gas separation membranes.

It is well known that a better separation of a gas mixture is generally achieved by increasing the membrane surface area (also referred to as increasing the membrane count) of the membrane performing the intended separation. While greater amounts of the product gas may be obtained in this manner, since gas separation membranes are typically a major portion of the capital expense of a gas separation installation, increasing the membrane count can render many of such applications non-economical. In other words, the increased value brought about by increasing yield of the product gas is swamped by the capital cost of the increased membrane count.

Therefore, there is a need to provide a gas separation scheme with improved performance without requiring an unsatisfactory increase in the membrane count.

An important goal for many membrane-based separations is an increased recovery of the product gas (i.e., the first gas). Consider a three-stage membrane separation scheme in which the retentate of the first (or feed) stage is fed to a second (or retentate) stage, the product gas constitutes the retentate gas from the second stage, the permeate from the first stage is fed to a third (or permeate) stage, both the second stage permeate and the third stage retentate are recycled to the first stage, and the third stage permeate is vented. US 10,561,978 discloses the use of a portion of the retentate gases in each of the first and second stages of such a scheme as a sweep gas. However, this comes at the expense of increasing operating expenses due to the increased need for compression energy since the recycled permeate must be compressed prior to being fed to the feed stage. If the recycle flow is large enough, it may even require the use of a larger compressor and correspondingly increase the capital expense of such a scheme. Also, because the third stage permeate is vented and not recycled back to the first stage, one of ordinary skill in the art would have clearly recognized that US 10,561,978 does not disclose the same use of a sweep gas on the third stage because it would have decreased recovery of the valuable first gas in the product gas.

### Summary

There is disclosed a method of separating a gas mixture comprising first and second gases into a first product gas enriched in the first gas and a second product gas enriched in the second gas. The method comprises the following steps. A feed gas stream is cooled at a first heat exchanger. The cooled feed gas stream is fed to a first gas separation membrane module, hereinafter referred to as the feed stage. The first gas separation membrane module comprises a pressure vessel, at least one tubesheet, and a polymeric membrane that is selective for the second gas over the first gas. The feed stage is adapted and configured to receive the cooled feed gas stream and produce a feed stage permeate gas stream that is enriched in the second gas compared to the feed gas and a feed stage retentate gas stream that is enriched in the first gas compared to the feed gas. The feed stage permeate gas stream and the feed stage retentate gas stream are withdrawn from the feed stage. The feed stage retentate gas stream is fed to a second gas separation membrane module, hereinafter referred to as the retentate stage. The second gas separation membrane module comprises a pressure vessel, at least one tubesheet, and a polymeric membrane that is selective for the second gas over the first gas. The retentate stage is adapted and configured to receive the remaining portion of the feed stage retentate gas stream and produce a retentate stage permeate gas stream that is enriched in the second gas compared to the feed stage retentate gas stream and a retentate gas stream that is enriched in the first gas compared to the feed stage retentate gas stream. The retentate stage permeate gas stream and the retentate stage retentate gas stream are withdrawn from the retentate stage. At least a portion of the retentate stage retentate gas stream is recovered as the first product gas. The feed stage permeate gas stream is fed to a third gas separation membrane modules, hereinafter referred to as the first permeate stage. The third gas separation membrane module comprises a pressure vessel, at least one tubesheet, and a polymeric membrane that is selective for the second gas over the first gas. The first permeate stage is adapted and configured to receive the feed stage permeate gas stream and produce a first permeate stage permeate gas stream that is enriched in the second gas compared to the feed stage permeate gas stream and a first permeate stage retentate gas stream that is enriched in the first gas compared to the feed stage permeate gas stream. The first permeate stage retentate gas stream and the first permeate stage permeate gas stream are withdrawn from the first permeate stage. The first permeate stage retentate gas is fed to a fourth gas separation membrane module, hereinafter referred to as the second permeate stage. The fourth gas separation membrane module comprises a pressure vessel, at least one tubesheet, and a polymeric membrane that is selective for the second gas over the first gas. The second permeate stage is adapted and configured to receive the first permate stage retentate gas stream and produce a second permeate stage permeate gas stream that is enriched in the second gas compared to the first permeate stage retentate gas stream and a second permeate stage retentate gas stream that is enriched in the first gas compared to the first permeate stage retentate gas stream. A portion of the second permeate stage retentate gas stream is fed to a permeate side of the permeate stage as a sweep gas. A stream of the gas mixture, the retentate stage permeate gas stream and a remaining portion of the second permeate stage retentate gas stream are combined and compressed. The feed gas stream is comprised of the compressed and combined streams of the gas mixture, the retentate stage permeate gas, and the remaining portion of the second permeate stage retentate gas stream. Te second permeate stage permeate gas stream is either vented or is recovered as the second product gas, optionally after further treatment to remove one or more impurities therefrom.

There is also disclosed a system of separating a gas mixture comprising first and second gases into a first product gas enriched in the first gas and a second product gas enriched in the second gas, comprising: a first heat exchanger adapted and configured to cool a feed gas stream; a first gas separation membrane module, hereinafter referred to as the feed stage, operatively associated with the first heat exchanger that comprises a pressure vessel, at least one tubesheet, and a polymeric membrane that is selective for the second gas over the first gas, the feed stage being adapted and configured to receive a cooled feed gas stream from the first heat exchanger and produce a feed stage permeate gas stream that is enriched in the second gas compared to the feed gas and a feed stage retentate gas stream that is enriched in the first gas compared to the feed gas; withdrawing, from the feed stage, the feed stage permeate gas stream and the feed stage retentate gas stream; a second gas separation membrane module, hereinafter referred to as the retentate stage, operatively associated with the feed stage that comprises a pressure vessel, at least one tubesheet, and a polymeric membrane that is selective for the second gas over the first gas, the retentate stage being adapted and configured to receive a remaining portion of the feed stage retentate gas stream and produce a retentate stage permeate gas stream that is enriched in the second gas compared to the feed stage retentate gas stream and a retentate stage retentate gas stream that is enriched in the first gas compared to the feed stage retentate gas stream, wherein at least a portion of the retentate stage retentate gas stream is recovered as the first product gas; a third gas separation membrane module, hereinafter referred to as the first permeate stage, operatively associated with the feed stage that comprises a pressure vessel, at least one tubesheet, and a polymeric membrane that is selective for the second gas over the first gas, the first permeate stage being adapted and configured to receive the feed stage permeate gas stream and produce a first permeate stage permeate gas stream that is enriched in the second gas compared to the permeate stage permeate gas stream and a first permeate stage retentate gas stream that is enriched in the first gas compared to the feed stage permeate gas stream; a fourth gas separation membrane module, hereinafter referred to as the second permeate stage, operatively associated with the first permeate stage that comprises a pressure vessel, at least one tubesheet, and a polymeric membrane that is selective for the second gas over the first gas, the second permeate stage being adapted and configured to receive the first permeate stage retentate gas stream and produce a second permeate stage permeate gas stream that is enriched in the second gas compared to the first permeate stage retentate gas stream and a second permeate stage retentate gas stream that is enriched in the first gas compared to the first stage retentate gas stream, wherein a portion of the second permeate stage retentate gas stream is fed to a permeate side of the second permeate stage as a sweep gas; and a compressor in operative association with the retentate stage, the second permeate stage, and the feed stage, the compressor being adapted and configure to combine, and compress a stream of the gas mixture, the retentate stage permeate gas stream, and a remaining portion of the second permeate stage retentate gas stream, wherein the feed gas stream is comprised of the compressed and combined streams of the gas mixture, the retentate stage permeate gas, and the second permeate stage retentate gas stream, and the second permeate stage permeate gas stream is either vented or is recovered as the second product gas, optionally after further treatment to remove one or more impurities therefrom.

The above disclosed method and/or system may include one or more of the following aspects:
- the feed stage retentate gas stream is cooled at a second heat exchanger before being fed to the retentate stage.
- the feed stage permeate gas stream is cooled at a third heat exchanger before being fed to the permeate stage.
- the first permeate stage retentate gas stream is cooled at a fourth heat exchanger before being fed to the second permeate stage.
- a portion of the withdrawn retentate stage retentate gas stream is not recovered as the first product gas but is instead used as a sweep gas at the retentate stage.
- a portion of the withdrawn feed stage retentate gas stream is not fed to the retentate stage but is instead used as a sweep gas at the feed stage.
- the first permeate stage permeate gas stream is also combined and compressed with the stream of the gas mixture, the retentate stage permeate gas stream and the remaining portion of the second permeate stage retentate gas stream, the feed gas stream being comprised of the compressed and combined streams of the first permeate stage permeate gas stream, the gas mixture, the retentate stage permeate gas, and the remaining portion of the second permeate stage retentate gas stream.
- the first permeate stage permeate gas stream is either vented or is recovered, with the second permeate stage permeate gas stream, as the second product gas, optionally after further treatment to remove one or more impurities therefrom, and a portion of the second permeate stage retentate gas stream is fed to a permeate side of the permeate stage as a sweep gas.
- the gas mixture is biogas comprising 50-70 vol% of methane and 20 to 50 vol% carbon dioxide, the first gas is methane, and the second gas is carbon dioxide.
- one or more impurities are removed from the gas mixture using PSA, TSA, or TPSA, wherein the permeate stage permeate gas stream, diluted with the portion of the permeate stage retentate gas stream used as a sweep gas, is used as regeneration gas at the PSA, TSA, or TPSA.
- the regeneration gas is withdrawn from the PSA, TSA, or TPSA, thermally oxidizing the withdrawn regeneration gas at a thermal oxidizer, and venting the thermally oxidized regeneration gas from the thermal oxidizer.
- the permeate stage permeate gas stream, diluted with the portion of the permeate stage retentate gas stream used as a sweep gas, is flared.
- the polymeric membrane is made of a polyimide and has a second gas/first gas selectivity of least 8.
- the gas mixture is natural gas comprising methane and carbon dioxide, the first gas is methane and the second gas is carbon dioxide.
- an air cooler is operatively associated with the compressor and the heat exchanger and is adapted and configured to remove a heat of compression resulting from compression of the feed gas stream at the compressor.
- a temperature difference between a temperature of the compressed feed gas stream upstream of the heat exchanger and a temperature of the cooled compressed feed gas stream downstream of the heat exchanger is 140-180 °F.
- a temperature difference between a temperature of the compressed feed gas stream upstream of the heat exchanger and a temperature of the cooled compressed feed gas stream downstream of the heat exchanger is 30-80 °F.

### Brief Description of the Drawings

For a further understanding of the nature and objects of the present invention, reference should be made to the following detailed description, taken in conjunction with the accompanying drawings, in which like elements are given the same or analogous reference numbers and wherein:
**FIG 1** is a schematic of an embodiment of the invention in which the feed gas stream fed to the feed stage is cooled and the permeate stage is swept with a portion of the permeate stage retentate.
**FIG 2** is a variant of the scheme of **FIG 1** which also includes cooling of the feed stage retentate prior to its being fed to the retentate stage.
**FIG 3** is a variant of the scheme of **FIG 2** which also includes cooling of the feed stage permeate prior to its being fed to the first permeate stage.
**FIG 4** is a variant of the scheme of **FIG 3** which also includes cooling of the first permeate stage retentate prior to its being fed to the second permeate stage.
**FIG 5** is a variant of the scheme of **FIG 4** which also includes the use of a portion of the retentate stage retentate for sweeping the retentate stage.
**FIG 6** is a variant of the scheme of **FIG 5** which also includes the use of a portion of the feed stage retentate for sweeping the feed stage.
**FIG 7** is a variant of the scheme of **FIG 4** which also includes the use of a portion of the feed stage retentate for sweeping the feed stage.
**FIG 8** is a variant of the scheme of **FIG 4** which also includes the use of a portion of the retentate stage retentate for sweeping the retentate stage.
**FIG 9** is a variant of the scheme of **FIG 8** which also includes the use of a portion of the feed stage retentate for sweeping the feed stage.
**FIG 10** is a variant of the scheme of **FIG 3** which also includes the use of a portion of the feed stage retentate for sweeping the feed stage.
**FIG 11** is a variant of the scheme of **FIG 2** which also includes cooling of the first permeate stage retentate prior to its being fed to the second permeate stage.
**FIG 12** is a variant of the scheme of **FIG 11** which also includes the use of a portion of the retentate stage retentate for sweeping the retentate stage.
**FIG 13** is a variant of the scheme of **FIG 12** which also includes the use of a portion of the feed stage retentate for sweeping the feed stage.
**FIG 14** is a variant of the scheme of **FIG 11** which also includes the use of a portion of the feed stage retentate for sweeping the feed stage.
**FIG 15** is a variant of the scheme of **FIG 2** which also includes the use of a portion of the retentate stage retentate for sweeping the retentate stage.
**FIG 16** is a variant of the scheme of **FIG 15** which also includes the use of a portion of the feed stage retentate for sweeping the feed stage.
**FIG 17** is a variant of the scheme of **FIG 1** which also includes the use of a portion of the feed stage retentate for sweeping the feed stage.
**FIG 18** is a variant of the scheme of **FIG 1** which also includes cooling of the feed stage permeate prior to its being fed to the first permeate stage.
**FIG 19** is a variant of the scheme of **FIG 18** which also includes cooling of the first permeate stage retentate prior to its being fed to the second permeate stage.
**FIG 20** is a variant of the scheme of **FIG 19** which also includes the use of a portion of the retentate stage retentate for sweeping the retentate stage.
**FIG 21** is a variant of the scheme of **FIG 20** which also includes the use of a portion of the feed stage retentate for sweeping the feed stage.
**FIG 22** is a variant of the scheme of **FIG 1** which also includes cooling of the first permeate stage retentate prior to its being fed to the second permeate stage.
**FIG 23** is a variant of the scheme of **FIG 22** which also includes the use of a portion of the retentate stage retentate for sweeping the retentate stage.
**FIG 24** is a variant of the scheme of **FIG 23** which also includes the use of a portion of the feed stage retentate for sweeping the feed stage.
**FIG 25** is a variant of the scheme of **FIG 1** which also includes the use of a portion of the retentate stage retentate for sweeping the retentate stage.
**FIG 26** is a variant of the scheme of **FIG 25** which also includes the use of a portion of the feed stage retentate for sweeping the feed stage.
**FIG 27** is a variant of the scheme of **FIG 1** which also includes the use of a portion of the feed stage retentate for sweeping the feed stage.

### Description of Preferred Embodiments

Separation of a gas mixture comprising first and second gases may be improved using three stages of gas separation membrane modules that includes the additional techniques of cooling the feed gas stream that is fed to the first stage and using a portion of the third stage retentate as a sweep gas on the third stage. Cooling the feed gas stream results in a lowered operating temperature of the polymeric membrane of the first stage. This lowered operating temperature increases the selectivity of the membrane for the second gas over the first gas. The loss of flux (productivity) of the second gas that would be expected from the point of view of the state of the art is more than compensated for by sweeping the third gas separation module with a portion of the retentate from that module. Surprisingly, the synergistic effect of these two techniques exceeds what might be expected by the skilled artisan from the combination of the effects of cooling alone and sweep alone.

The first and second gases of the gas mixture are not limited so long as the polymeric membranes used in the invention are selective for the second gas over the first gas. This means that the ratio of the permeability of the second gas to the permeability of the first gas is greater than one. Typically, the selectivity is at least 8. Preferably, the selectivity is greater than 20 and may reach to around 25 or 30 or even higher than 30.

While the following description of embodiments of the invention include features specific to a gas mixture that is biogas, invention is applicable to any other gas mixture comprising first and second gases in which the first product gas resulting from the membrane-based invention becomes enriched in the first gas compared to the gas mixture and in which the second gas exhibits a higher permeability in the polymeric membranes than the first gas (i.e., the polymeric membrane is selective for the second gas over the first gas). For example, a stream of natural gas comprising similar amounts of methane and carbon dioxide may be treated with the invention. Another example is dehydration, in which the gas mixture comprises a first gas (such as the methane in natural gas) and water vapor (as the second gas) and the membranes are selective for water over the first gas (such as methane). A still further example is the separation of nitrogen and oxygen from air into a first product gas enriched in nitrogen (i.e., nitrogen-enriched air) and a second product gas (or waste gas) enriched in oxygen (i.e., oxygen-enriched air).

A particular gas mixture for separation by the invention is biogas that is optionally pretreated to remove one or more contaminants.

Biogas typically refers to a mixture of different gases produced from the breakdown of organic matter in the absence of oxygen in an anaerobic digestion process (i.e., digester gas). Biogas can be produced from raw materials such as agricultural waste, manure, municipal waste, plant material, sewage, green waste or food waste. Biogas typically comprises as the main components 50-70% of methane (CH₄) and 20 to 50% carbon dioxide (CO₂), with lower levels of other components such as N₂ and O₂, up to 5,000 ppm or more of hydrogen sulfide (H₂S), siloxanes, up to 1,000-2,000 ppm of volatile organic compounds (VOC's), and is saturated with water. Biogas also refers to landfill gas (LFG), which is derived from solid waste landfills that decompose to the organic waste with time, and microbe digestion of the variety of organic waste to produce methane and CO₂ with the wide variety of decomposition products above. In either case biogas includes high concentrations of methane and carbon dioxide, water vapor, and lesser concentrations of VOC's and other contaminants.

While the features of the following embodiments refer from time to time to compositions specific to biogas, such embodiments are suitable for separation according to the invention of any gas mixture as described above.

In the case of biogas such as landfill gas or digester gas, the raw biogas is typically at a pressure of 0-10 psig, a temperature of 50-120 °F, and contains about 50-70 vol% methane, 20-50 vol% carbon dioxide, although lower amounts of methane and higher amounts of carbon dioxide are sometimes observed such as more or less equivalent amounts of methane and carbon dioxide. Biogas from a landfill is often around 95 °F, whereas biogas from a digester is often around 120 °F. Optionally, preliminary treatment steps may be applied to the low pressure raw biogas to condition it prior to compression at the main compressor up to the pressure at which the gas mixture is separated at the first stage or just after compression at the main compressor. If the pressure of the raw biogas is not sufficient for intended preliminary purification steps, an upstream blower or small compressor may be used to boost the pressure of the raw biogas to the pressure that is suitable for such preliminary purification steps. Particles from dust may be filtered out using a mechanical filter. Water and/or oil droplets may be removed using a coalescing filter. Other contaminants such as H2S and/or volatile organic compounds (VOCs) may be removed using such purification technologies as pressure swing adsorption (PSA), temperature swing adsorption (TSA), temperature pressure swing adsorption (TPSA), and/or beds of non-regenerable adsorbents such as activated carbon. An exemplary preliminary treatment is disclosed in US 7,025,803. It should be noted that, if the raw biogas does not contain amounts of contaminants that either harmful to the polymeric membranes or are at levels that exceed the desired specification of the product gas, the raw biogas need not always be pretreated to remove one or more contaminants.

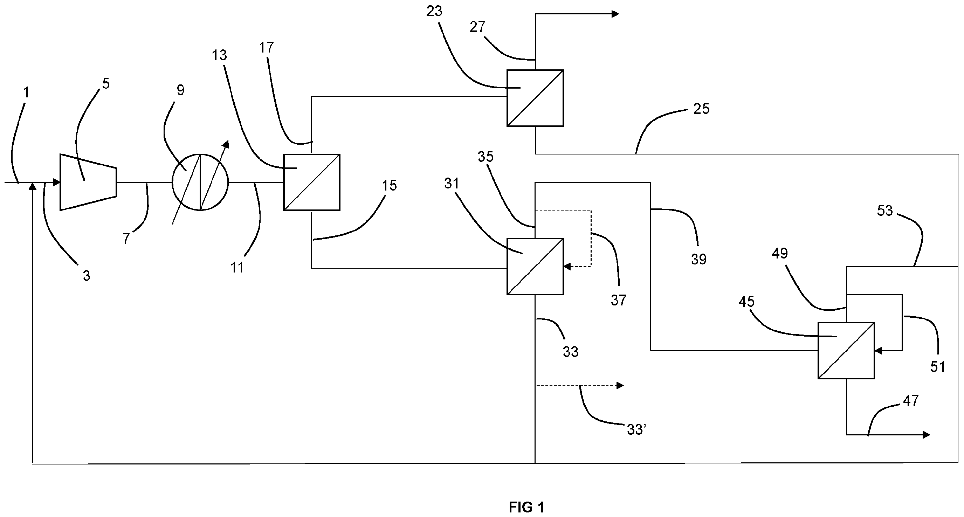

As best shown in **FIG 1****,** after any optional preliminary purification steps, the stream **1** of the gas mixture is compressed at a main compressor **5,** along with any recycle gases, up to the pressure at which the first gas separation membrane module **13** is operated. Depending upon whether a cooler (such as an air cooler) is disposed downstream of the compressor, the compressed and optionally air-cooled feed gas stream **8** is typically at a pressure of 160-240 psig, at a temperature of 100-220 °F.

The compressed feed gas stream **7** is cooled at a heat exchanger **9** (i.e., a chiller). At the heat exchanger **9,** heat from the higher temperature feed gas stream **7** is transferred to lower temperature heat transfer fluid. The heat transfer fluid is typically a mixture of glycol and water but may be any heat transfer fluid suitable for cooling the compressed feed gas stream **7** to the intended temperature at the feed stage **13.** The chilled compressed feed gas stream **11** should be cooled to as low a temperature as possible without causing the condensing of condensable components in the gas mixture or freezing of any water present. In other words, the compressed feed gas stream **7** should not be chilled to its dew point. The chilled compressed feed gas stream **11** is typically at a pressure of 160-240 psig and at a temperature of 30-80 °F, often 40-70 °F. One of ordinary skill in the art will recognize that there is a significant temperature differential (30-180 °F) between the unchilled and chilled compressed feed gas streams **7, 11.**

The optional air cooler disposed downstream of the compressor **5** may be distinguished from the heat exchanger **9** of the invention. The purpose of the air cooler is to remove the heat of compression produced by the compressor **9** and not to cool the feed gas stream **7** significantly below the pre-compression temperature. In contrast, the purpose of the heat exchanger **9** is to cool the compressed feed gas stream **7** to a temperature significantly lower than the pre-compression temperature and thus significantly lower than that of conventional feed gas streams. For example, the cooled compressed feed gas stream **11** downstream of the heat exchanger **9** in the invention is typically at a temperature of only 30-80 °F. Therefore, in the case of an air cooler disposed downstream of the compressor **5,** the temperature difference between compressed feed gas stream **7** upstream of the heat exchanger **9** and the cooled compressed feed gas stream **11** downstream of the heat exchanger **9** is 30-80 °F. When no cooler (such as an air cooler) is present in between the compressor **5** and heat exchanger 9, the temperature of the unchilled compressed feed gas stream **7** can reach as high as 220 °F. In such a case, the temperature difference between the compressed feed gas stream **7** upstream of the heat exchanger **9** and the cooled compressed feed gas stream **11** downstream of the heat exchanger **9** is as large as 140-180 °F.

The chilled feed gas stream **11** is fed to the first gas separation membrane module **13,** also referred to as the feed stage or the first stage. The first gas separation membrane module includes a pressure vessel, at least one tube sheet, and a polymeric membrane that is selective for the second gas (such as carbon dioxide) over the first gas (such as methane). Those of skill in the art will recognize that such a gas separation membrane module **13** is adapted and configured to produce a permeate gas stream **15** and a retentate gas stream **17.** The permeate gas stream **15,** hereinafter referred to as the feed stage permeate gas stream **15,** is enriched in the second gas and deficient in the first gas compared to the feed gas stream **3.** Conversely, the retentate gas stream **17,** hereinafter referred to as the feed stage retentate gas stream **17** is enriched in the first gas and deficient in the second gas compared to the feed gas stream **3.**

As typical in the field of gas separation membranes, the feed stage **13** may include a plurality of gas separation membrane modules arranged in parallel in which manifolds are used to feed the cooled, compressed feed gas stream **11** to each of the plurality (of gas separation membrane modules), collect the retentate gas streams **17** from each of the plurality, and collect the permeate gas streams **15** from each of the plurality.

While any polymeric material of the polymeric membrane known in the field of gas separation membranes to be selective for the second gas (such as carbon dioxide) over the first gas (such as methane) may be used in the feed stage **13,** typically the polymeric material is a polyimide. A particularly suitable gas separation membrane module including a polyimide membrane may be obtained from Air Liquide Advanced Separations in Newport, Delaware USA.

The feed stage retentate gas stream **17** typically has a pressure of 150-230 psig and a temperature of 30-60 °F. Consider a gas mixture comprising the first gas methane at 50 vol% and a second gas carbon dioxide at 50 vol%. Separation of such a gas mixture at the feed stage **13** would typically result in the first retentate gas stream **17** having about 75 vol% methane and 25 vol% carbon dioxide, although the methane and carbon dioxide contents may of course be higher or lower depending upon the composition of the gas mixture and the particular selectivity of the polymeric membrane. One of ordinary skill will recognize that the temperature of the feed stage retentate gas stream **17** is well below the temperature of feed stage retentates typically exhibited by conventional membrane schemes.

The feed stage permeate gas stream **15** typically has a pressure of 30-60 psig and a temperature of 40-70 °F. Again, consider a gas mixture comprising 50 vol% methane and 50 vol% carbon dioxide. Separation of such a gas mixture at the feed stage **13** would typically result in the feed stage permeate gas stream 15 having about 5 vol% methane, and 95 vol% carbon dioxide, although the methane and carbon dioxide contents may be higher or lower, again depending upon the composition of the gas mixture and the selectivity of the polymeric membrane.

The feed stage retentate gas stream **17** is fed to the second gas separation membrane module **23,** also referred to as the retentate stage or second stage.

Similar to the first gas separation membrane module **13,** the second gas separation membrane module **23** includes a pressure vessel, at least one tube sheet, and a polymeric membrane that is selective for the second gas carbon dioxide over the first gas methane. Those of skill in the art will recognize that such a gas separation membrane module is adapted and configured to produce a corresponding permeate gas stream **25** and a retentate gas stream **27.** The permeate gas stream **25,** hereinafter the second permeate gas stream, is enriched in the second gas and deficient in the first gas compared to the feed stage retentate gas stream **17.** Conversely, the retentate stage retentate gas stream **27,** hereinafter the second retentate gas stream, is enriched in the first gas and deficient in the second gas compared to the feed stage retentate gas stream **17.**

Similar to the feed stage **13,** the retentate stage **23** may include a plurality of gas separation membrane modules arranged in parallel in which manifolds are used to feed the remaining portion **21** of the feed stage retentate gas stream **17** to each of the plurality (of gas separation membrane modules), collect the retentate stage retentate gas streams **27** from each of the plurality, and collect the retentate stage permeate gas streams **25** from each of the plurality.

While any polymeric material of the polymeric membrane known in the field of gas separation membranes to be selective for the second gas (such as carbon dioxide) over the first gas (such as methane) may be used in the retentate stage **27,** typically the polymeric material is a polyimide. A particularly suitable gas separation membrane module including a polyimide membrane may be obtained from Air Liquide Advanced Separations in Newport, Delaware USA. For example, the polymeric membrane of the retentate stage may have a relatively high productivity (i.e., the flux for the second gas) and a relatively lower selectivity for the second gas over the first gas.

The retentate stage permeate gas stream **25** is fed to (i.e., recycled to) the suction inlet of the main compressor **5** where it is combined and compressed with the stream of the gas mixture **1.** Recycling the retentate stage permeate gas stream **25** allows the substantial amount of the first gas contained therein to be recovered and subjected to membrane separation to remove amounts of the second gas as described above.

The recovered retentate stage retentate gas stream **27** constitutes the first product gas and may be accumulated in a buffer tank. Optionally, it may be further compressed to a pressure suitable for filling tanks of vehicles fueled by natural gas. Alternatively, the first product gas may be further compressed and injected into the local natural gas grid.

The feed stage permeate gas stream 15 is fed to a third gas separation membrane module, hereinafter referred to as the first permeate stage. Similar to the first and second gas separation membrane modules **13, 23,** the third gas separation membrane module **31** includes a pressure vessel, at least one tube sheet, and a polymeric membrane that is selective for the second gas carbon dioxide over the first gas methane. Those of skill in the art will recognize that such a gas separation membrane module is adapted and configured to produce a corresponding permeate gas stream **33** and a retentate gas stream **35.** The permeate gas stream **33,** hereinafter the first permeate stage permeate gas stream, is enriched in the second gas and deficient in the first gas compared to the feed stage permeate gas stream **15.** Conversely, the retentate gas stream **35,** hereinafter the first permeate stage retentate gas stream, is enriched in the first gas and deficient in the second gas compared to the feed stage permeate gas stream **15.**

Similar to the first and second gas separation membrane modules **13, 23,** the the first permeate stage **31** may include a plurality of gas separation membrane modules arranged in parallel in which manifolds are used to feed the feed stage permeate gas stream **15** to each of the plurality (of gas separation membrane modules), collect the permeate stage retentate gas streams **35** from each of the plurality, and collect the permeate stage permeate gas streams **33** from each of the plurality.

While any polymeric material of the polymeric membrane known in the field of gas separation membranes to be selective for the second gas (such as carbon dioxide) over the first gas (such as methane) may be used in the permeate stage **27,** typically the polymeric material is a polyimide. A particularly suitable gas separation membrane module including a polyimide membrane may be obtained from Air Liquide Advanced Separations in Newport, Delaware USA.

The first permeate stage permeate gas stream 33 is fed to (i.e., recycled to) the suction inlet of the main compressor **5** where it is combined and compressed, along with the stream of the gas mixture **1** and the retentate stage permeate gas stream **25.**

At least a portion of the first permeate stage retentate gas stream **35** is fed to a fourth gas separation membrane module **45**, hereinafter referred to as the second permeate stage. Similar to the first, second, and third gas separation membrane modules **13**, **23**, **31** the fourth gas separation membrane module **45** includes a pressure vessel, at least one tube sheet, and a polymeric membrane that is selective for the second gas carbon dioxide over the first gas methane. Those of skill in the art will recognize that such a gas separation membrane module is adapted and configured to produce a corresponding permeate gas stream **47** and a retentate gas stream **49.** The permeate gas stream **47**, hereinafter the second permeate stage permeate gas stream, is enriched in the second gas and deficient in the first gas compared to the first permeate stage retentate gas stream **35.** Conversely, the retentate gas stream **49,** hereinafter the second permeate stage retentate gas stream, is enriched in the first gas and deficient in the second gas compared to the first permeate stage retentate gas stream **35.**

Optionally, a portion of the first permeate stage retentate gas stream **35** is used as a sweep gas for the first permeate stage **31.** Those skilled in the art will recognize that configurations for gas separation membrane modules utilizing sweep are well known in the field of gas separation membrane separation and their details need not be duplicated here. Due to the lowered partial pressure of the second gas in the first permeate stage permeate gas stream **33** diluted with an amount of the permeate stage retentate gas stream **35**, the greater second gas partial pressure difference across the polymeric membrane causes a greater flux of the second gas across the membrane. Thus, removal of second gas from the feed stage permeate gas stream **15** is especially enhanced by the use of the sweep gas. As described above, the first permeate stage **31** may include a plurality of the gas separation membrane modules in parallel. In such an embodiment, each single gas separation module may be swept with a portion **37** of the first permeate stage retentate gas stream **35** produced by that single module, or alternatively, a portion **37** of the first permeate stage retentate gas stream **35** collected from the first permeate stage **31** may be provided to each of the individual gas separation membrane modules of the permeate stage **31** via a manifold. In this optional embodiment, the first permeate stage permeate gas stream **33** is vented as vent stream **33'.** The vent stream **33'** may be simply flared. If the methane content is too high considering any applicable environmental regulations, it may first be thermally oxidized in a thermal oxidizer (TOX) before being vented from the TOX. Alternatively, it may be used as a regeneration gas for any TSA, PSA, or TPSA pretreatment that may be present upstream of the main compressor **5.** The waste gas resulting from regeneration, which includes the permeate gas stream from the first gas separation membrane module and any desorbed impurities from the TSA, PSA, or TPSA is typically thermally oxidized in a TOX and then vented. Alternatively, the first permeate stage permeate gas stream **33** may be recovered, along with the second permeate stage permeate gas stream **47,** as a second product gas enriched in the second gas.

The second permeate stage permeate gas stream **47** is vented and may be simply flared. If the methane content is too high considering any applicable environmental regulations, it may first be thermally oxidized in a thermal oxidizer (TOX) before being vented from the TOX. Alternatively, it may be used as a regeneration gas for any TSA, PSA, or TPSA pretreatment that may be present upstream of the main compressor **5.** The waste gas resulting from regeneration, which includes the permeate gas stream from the first gas separation membrane module and any desorbed impurities from the TSA, PSA, or TPSA is typically thermally oxidized in a TOX and then vented. Alternatively, the second permeate stage permeate gas stream **47** may be recovered (optionally, along with the vent stream **33',** as a second product gas enriched in the second gas.

A portion **51** of the second permeate stage retentate gas stream **49** is used as a sweep gas for the second permeate stage **45.** Those skilled in the art will recognize that configurations for gas separation membrane modules utilizing sweep are well known in the field of gas separation membrane separation and their details need not be duplicated here. Due to the lowered partial pressure of the second gas in the second permeate stage permeate gas stream **47** diluted with an amount of the second permeate stage retentate gas stream **49,** the greater second gas partial pressure difference across the polymeric membrane causes a greater flux of the second gas across the membrane. Thus, removal of second gas from the second permeate stage retentate gas stream **49** is especially enhanced by the use of the sweep gas. As described above, the second permeate stage **45** may include a plurality of the gas separation membrane modules in parallel. In such an embodiment, each single gas separation module may be swept with a portion **51** of the second permeate stage retentate gas stream **49** produced by that single module, or alternatively, a portion **51** of the second permeate stage retentate gas stream **49** collected from the second permeate stage **45** may be provided to each of the individual gas separation membrane modules of the second permeate stage **45** via a manifold.

A remaining portion **53** of the second permeate stage retentate gas stream **49** is fed to (i.e., recycled to) the suction inlet of the main compressor **5** where it is combined and compressed with the stream of the gas mixture **1,** retentate stage permeate gas stream **25,** and the first permeate stage permeate gas stream **33.** The combined and compressed retentate stage gas permeate gas stream, stream of the gas mixture, first permeate stage permeate gas stream **33,** and the remaining portion of the permeate stage retentate gas stream constitutes the feed gas stream **7** that is cooled at the first heat exchanger. Recycling the retentate stage permeate gas stream **25,** the first permeate stage retentate gas stream **35** and the remaining portion of the second permeate stage retentate gas stream **53** allows the substantial amount of the first gas contained therein to be recovered and subjected to membrane separation to remove amounts of the second gas as described above.

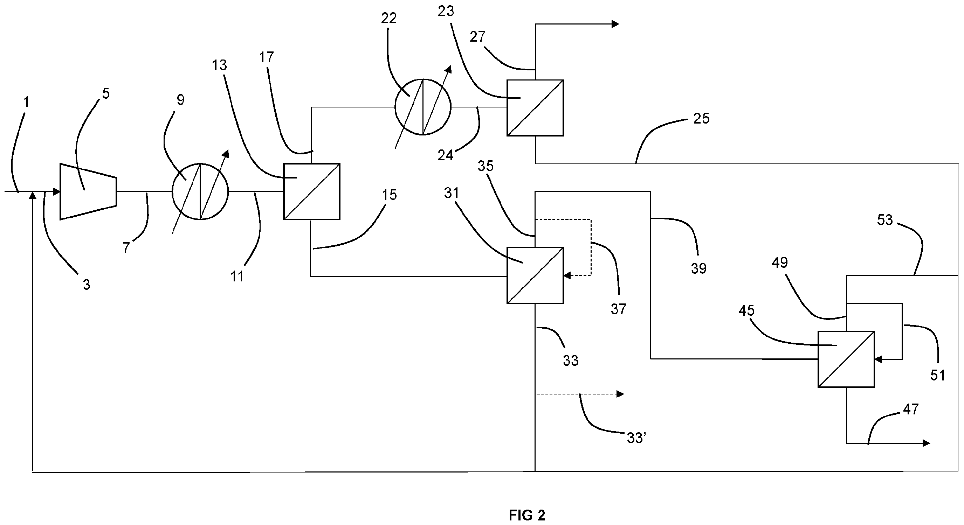

As best shown in **FIG 2****,** the feed stage retentate gas stream **17** may be chilled at a second heat exchanger **22** prior to being fed to the retentate stage **23.** The second heat exchanger **22** may optionally be integrated with the first heat exchanger **9.** This optional chilling does not affect the composition of the remaining portion **21** feed stage retentate gas stream **17** fed to the retentate stage **23** and has only a minor effect upon the pressure. This optional chilling is of course not necessary since cooling of the compressed feed gas stream **7** not only results in a lowered operating temperature of the polymeric membrane of the feed stage **13,** it also results in a lowered operating temperature of the polymeric membrane of the retentate stage **23.**

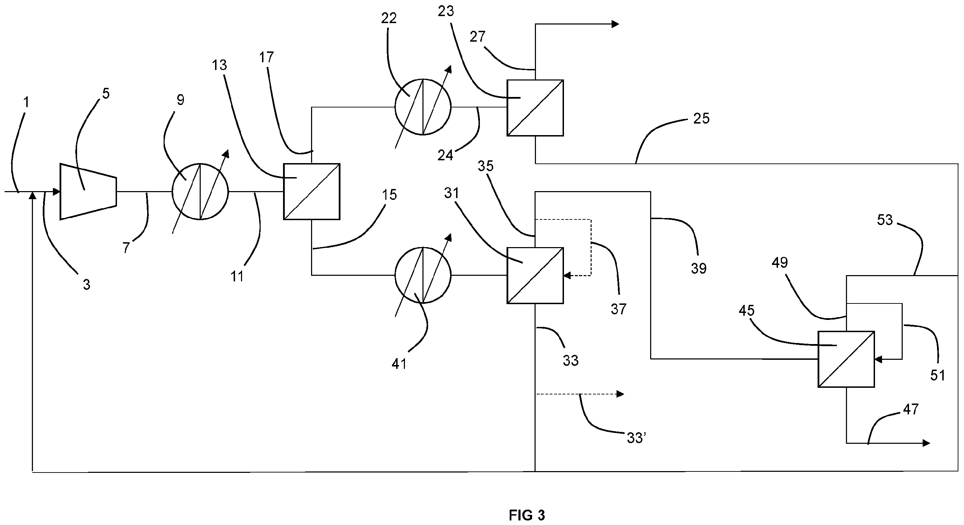

As best illustrated in **FIG 3****,** the feed stage retentate gas stream **21** may be chilled at a second heat exchanger **22** prior to being fed to the retentate stage **23.** In addition, the feed stage permeate gas stream **15** may be chilled at a third heat exchanger **41** prior to being fed to the first permeate stage **31.** The second and/or third heat exchangers **22** , **41** may optionally be integrated with the first heat exchanger **9.**

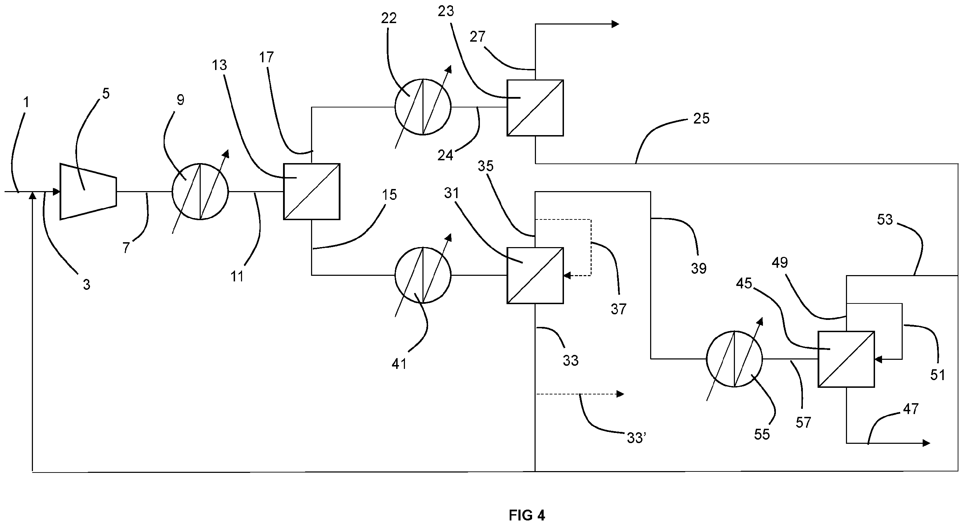

As best shown in **FIG 4****,** the feed stage retentate gas stream **21** may be chilled at a second heat exchanger **22** prior to being fed to the retentate stage **23.** In addition, the feed stage permeate gas stream **15** may be chilled at a third heat exchanger **41** prior to being fed to the first permeate stage **31.** Further, the first permeate stage retentate gas stream **35** may be chilled at a fourth heat exchanger **55** prior to being fed to the second permeate stage **45.** The second, third and/or fourth heat exchangers **22, 41, 55** may optionally be integrated with the first heat exchanger **9.**

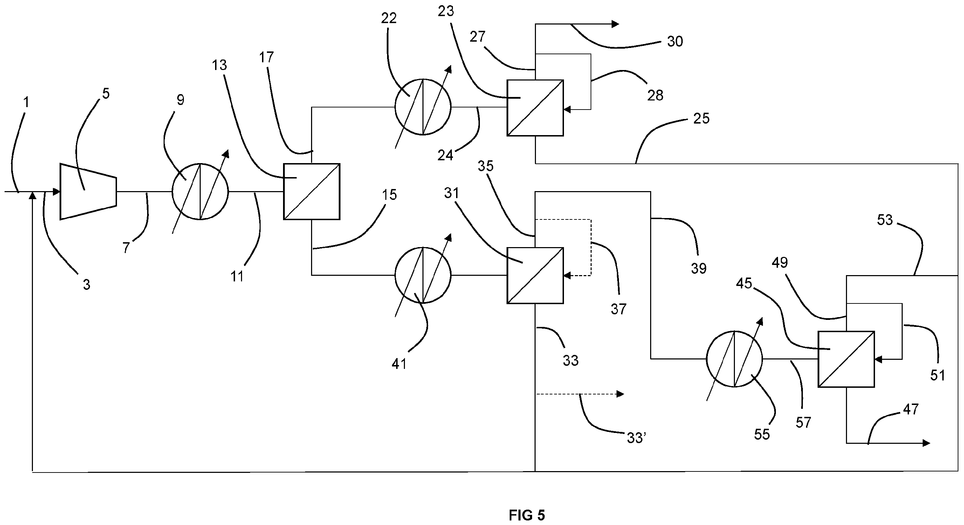

As best illustrated in **FIG 5**, the feed stage retentate gas stream **21** may be chilled at a second heat exchanger **22** prior to being fed to the retentate stage **23.** In addition, the feed stage permeate gas stream **15** may be chilled at a third heat exchanger **41** prior to being fed to the first permeate stage **31.** Additionally, the first permeate stage retentate gas stream **35** may be chilled at a fourth heat exchanger **55** prior to being fed to the second permeate stage **45.** Further, a portion **28** of the retentate stage retentate gas stream **27** may be used as a sweep gas for the retentate stage **23** and the remaining portion **30** recovered as the product gas. Due to the lowered partial pressure of the second gas in the retentate stage permeate gas stream **25** diluted with an amount of the retentate stage retentate gas stream **27**, the greater second gas partial pressure difference across the polymeric membrane causes a greater flux of the second gas across the membrane. Thus, removal of second gas from the portion **21** of the feed stage retentate gas stream **17** is especially enhanced by the use of the sweep gas.. The second, third and/or fourth heat exchangers **22**, **41**, **55** may optionally be integrated with the first heat exchanger **9.**

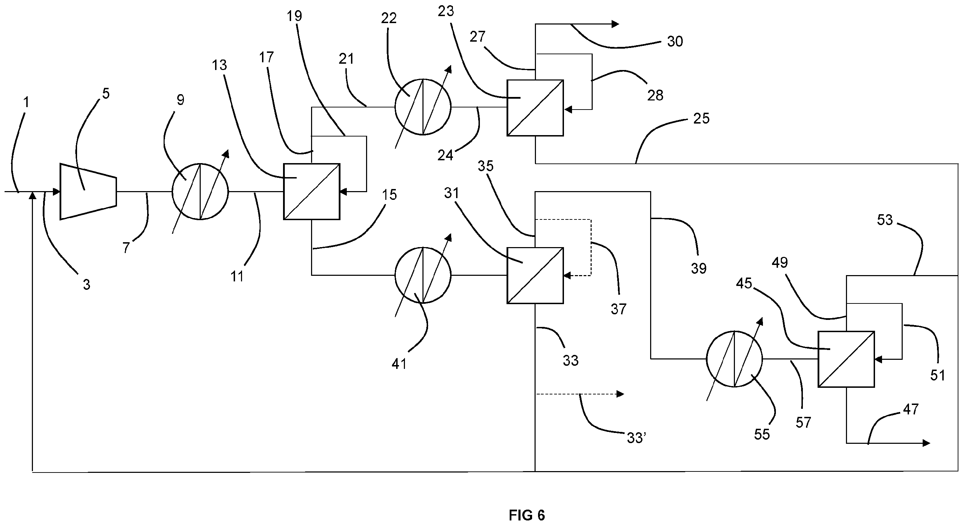

As best shown in **FIG 6**, the feed stage retentate gas stream **21** may be chilled at a second heat exchanger **22** prior to being fed to the retentate stage 23. In addition, the feed stage permeate gas stream **15** may be chilled at a third heat exchanger **41** prior to being fed to the first permeate stage **31.** Additionally, the first permeate stage retentate gas stream **35** may be chilled at a fourth heat exchanger **55** prior to being fed to the second permeate stage **45.** Further, a portion **28** of the retentate stage retentate gas stream **27** may be used as a sweep gas for the retentate stage **23** and the remaining portion **30** recovered as the product gas. Even further, a portion **19** of the feed stage retentate gas stream **17** may be used as a sweep gas for the feed stage **13.** Due to the lowered partial pressure of the second gas in the feed stage permeate gas stream **15** diluted with an amount of the permeate stage retentate gas stream **17,** the greater second gas partial pressure difference across the polymeric membrane causes a greater flux of the second gas across the membrane. Thus, removal of second gas from the feed gas stream **3** is especially enhanced by the use of the sweep gas. The second, third and/or fourth heat exchangers **22, 41, 55** may optionally be integrated with the first heat exchanger **9.**

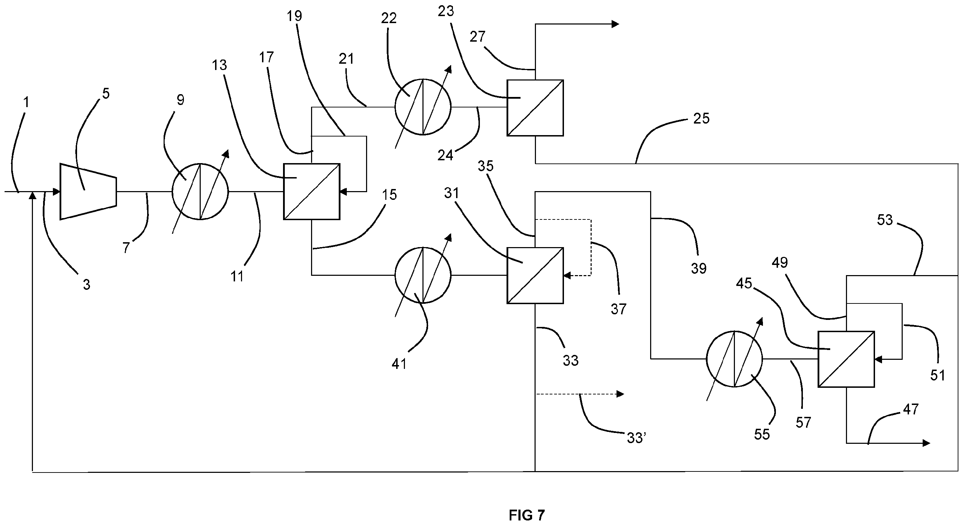

As best illustrated in **FIG 7**, the feed stage retentate gas stream **21** may be chilled at a second heat exchanger **22** prior to being fed to the retentate stage **23.** In addition, the feed stage permeate gas stream **15** may be chilled at a third heat exchanger **41** prior to being fed to the first permeate stage **31.** Further, the first permeate stage retentate gas stream **35** may be chilled at a fourth heat exchanger **55** prior to being fed to the second permeate stage **45.** The second, third and/or fourth heat exchangers **22, 41, 55** may optionally be integrated with the first heat exchanger **9.** Even further, a portion **19** of the feed stage retentate gas stream **17** may be used as a sweep gas for the feed stage **13.**

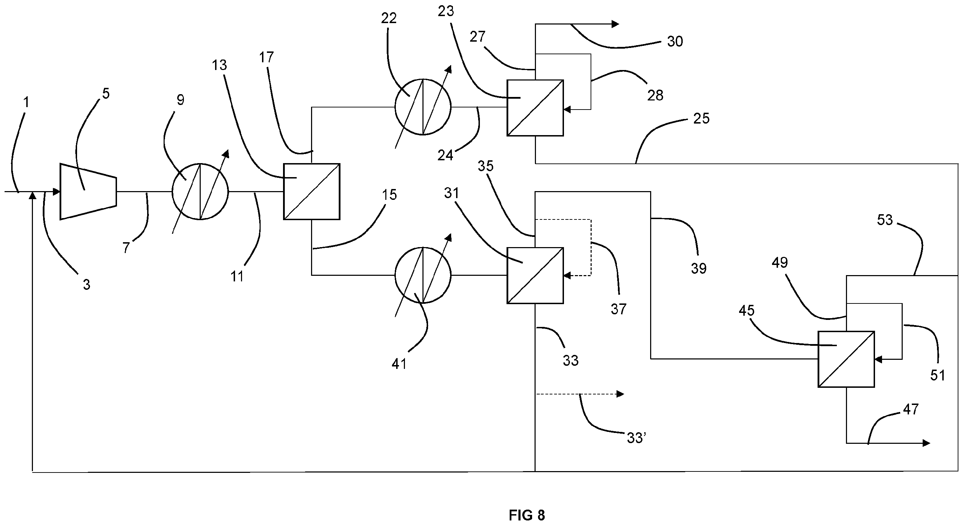

As best shown in **FIG 8**, the feed stage retentate gas stream **21** may be chilled at a second heat exchanger **22** prior to being fed to the retentate stage 23. In addition, the feed stage permeate gas stream **15** may be chilled at a third heat exchanger **41** prior to being fed to the first permeate stage **31.** Further, the first permeate stage retentate gas stream **35** may be chilled at a fourth heat exchanger **55** prior to being fed to the second permeate stage **45.** The second, third and/or fourth heat exchangers **22, 41, 55** may optionally be integrated with the first heat exchanger **9.** Even further, a portion **28** of the retentate stage retentate gas stream **27** may be used as a sweep gas for the retentate stage **23** and the remaining portion **30** recovered as the product gas.

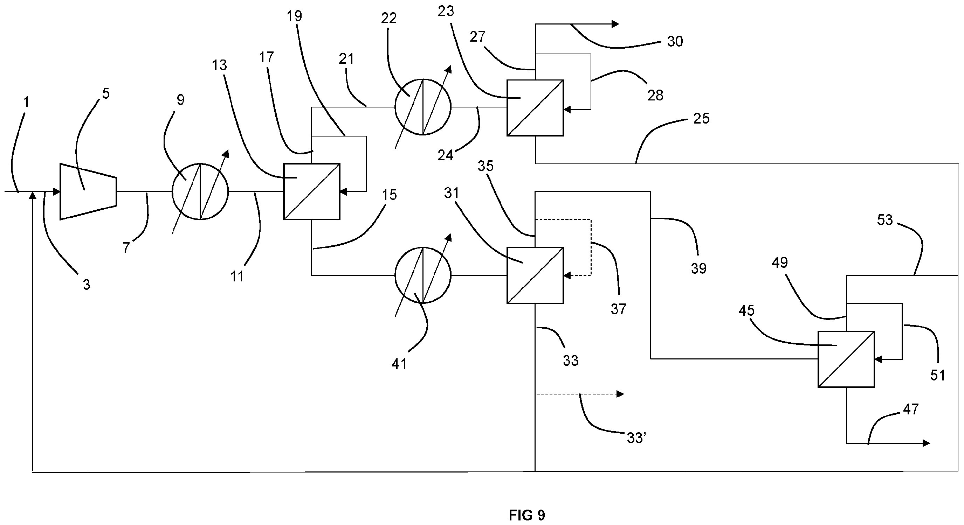

As best illustrated in **FIG 9**, the feed stage retentate gas stream **21** may be chilled at a second heat exchanger **22** prior to being fed to the retentate stage **23.** In addition, the feed stage permeate gas stream **15** may be chilled at a third heat exchanger **41** prior to being fed to the first permeate stage **31.** Further, the first permeate stage retentate gas stream **35** may be chilled at a fourth heat exchanger **55** prior to being fed to the second permeate stage **45.** The second, third and/or fourth heat exchangers **22, 41, 55** may optionally be integrated with the first heat exchanger **9.** Even further, a portion **28** of the retentate stage retentate gas stream **27** may be used as a sweep gas for the retentate stage **23** and the remaining portion **30** recovered as the product gas. Still further, a portion **19** of the feed stage retentate gas stream **17** may be used as a sweep gas for the feed stage **13.**

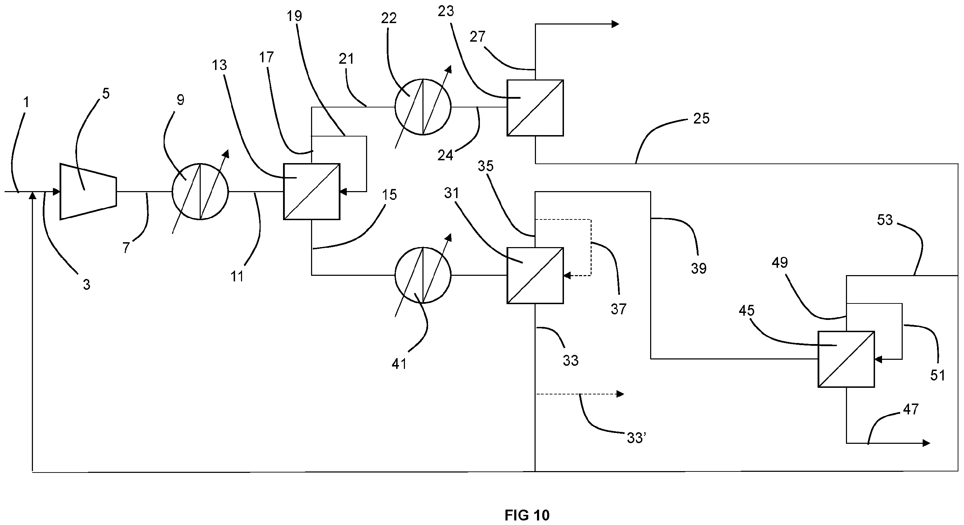

As best shown in **FIG 10**, the feed stage retentate gas stream **21** may be chilled at a second heat exchanger **22** prior to being fed to the retentate stage 23. In addition, the feed stage permeate gas stream **15** may be chilled at a third heat exchanger **41** prior to being fed to the first permeate stage **31.** The second and/or third heat exchangers **22** , **41** may optionally be integrated with the first heat exchanger **9.** Additionally, a portion **19** of the feed stage retentate gas stream **17** may be used as a sweep gas for the feed stage **13.**

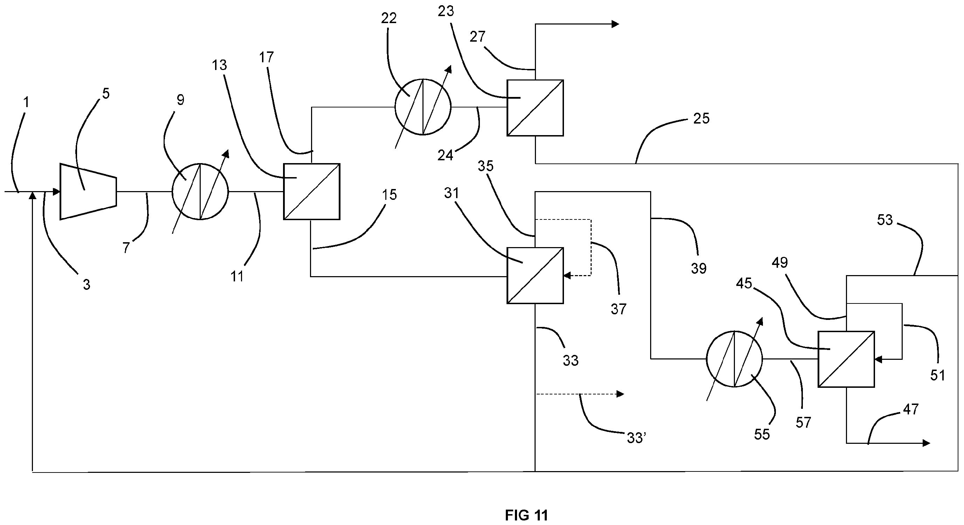

As best illustrated in **FIG 11****,** the feed stage retentate gas stream **21** may be chilled at a second heat exchanger **22** prior to being fed to the retentate stage **23.** The second heat exchanger **22** may optionally be integrated with the first heat exchanger **9.** Additionally, the first permeate stage retentate gas stream **35** may be chilled at a fourth heat exchanger **55** prior to being fed to the second permeate stage **45.** The second, third and/or fourth heat exchangers **22, 41, 55** may optionally be integrated with the first heat exchanger **9.**

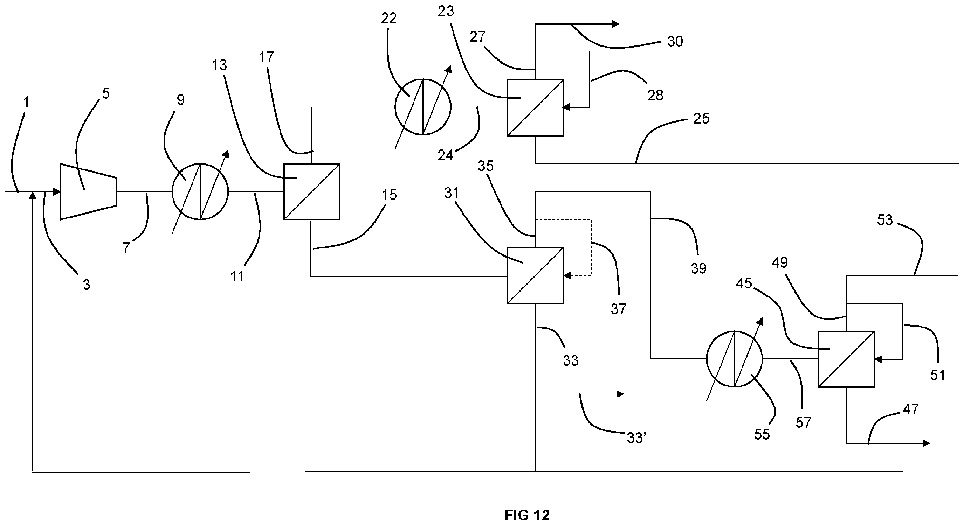

As best shown in **FIG 12****,** the feed stage retentate gas stream **21** may be chilled at a second heat exchanger **22** prior to being fed to the retentate stage **23.** The second heat exchanger **22** may optionally be integrated with the first heat exchanger **9.** Additionally, the first permeate stage retentate gas stream **35** may be chilled at a fourth heat exchanger **55** prior to being fed to the second permeate stage **45.** The second, third and/or fourth heat exchangers **22, 41, 55** may optionally be integrated with the first heat exchanger **9.** Further, a portion **28** of the retentate stage retentate gas stream **27** may be used as a sweep gas for the retentate stage **23** and the remaining portion **30** recovered as the product gas.

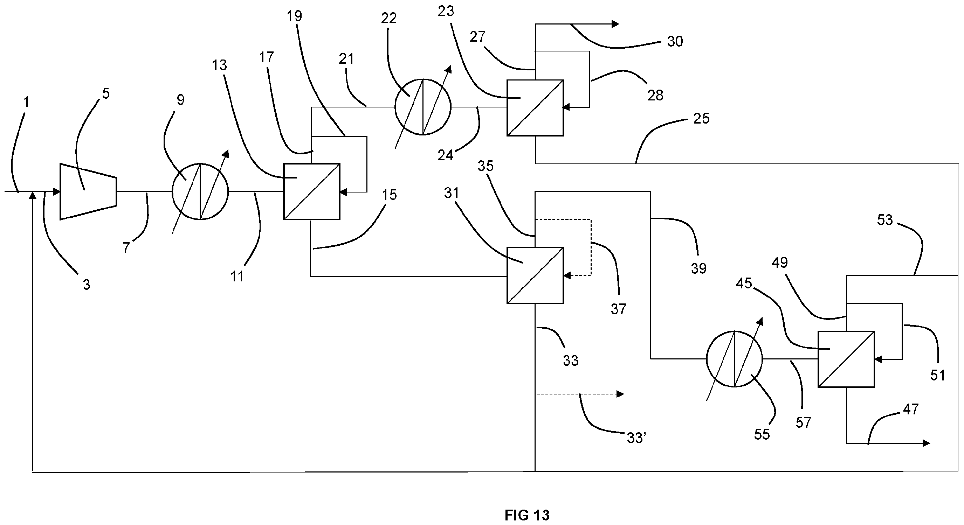

As best illustrated in **FIG 13****,** the feed stage retentate gas stream **21** may be chilled at a second heat exchanger **22** prior to being fed to the retentate stage **23.** The second heat exchanger **22** may optionally be integrated with the first heat exchanger **9.** Additionally, the first permeate stage retentate gas stream **35** may be chilled at a fourth heat exchanger **55** prior to being fed to the second permeate stage **45.** The second, third and/or fourth heat exchangers **22, 41, 55** may optionally be integrated with the first heat exchanger **9.** Further, a portion **28** of the retentate stage retentate gas stream **27** may be used as a sweep gas for the retentate stage **23** and the remaining portion **30** recovered as the product gas. Even further, a portion **19** of the feed stage retentate gas stream **17** may be used as a sweep gas for the feed stage **13.**

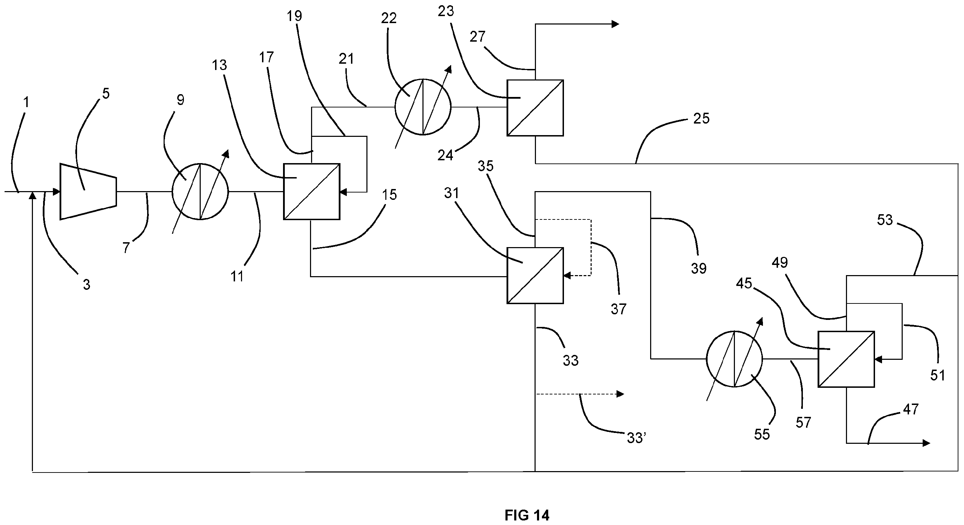

As best shown in **FIG 14****,** the feed stage retentate gas stream **21** may be chilled at a second heat exchanger **22** prior to being fed to the retentate stage **23.** The second heat exchanger **22** may optionally be integrated with the first heat exchanger **9.** Additionally, the first permeate stage retentate gas stream **35** may be chilled at a fourth heat exchanger **55** prior to being fed to the second permeate stage **45.** The second, third and/or fourth heat exchangers **22, 41, 55** may optionally be integrated with the first heat exchanger **9.** Further, a portion **28** of the retentate stage retentate gas stream **27** may be used as a sweep gas for the retentate stage **23** and the remaining portion **30** recovered as the product gas. Still futher, a portion **19** of the feed stage retentate gas stream **17** may be used as a sweep gas for the feed stage **13.**

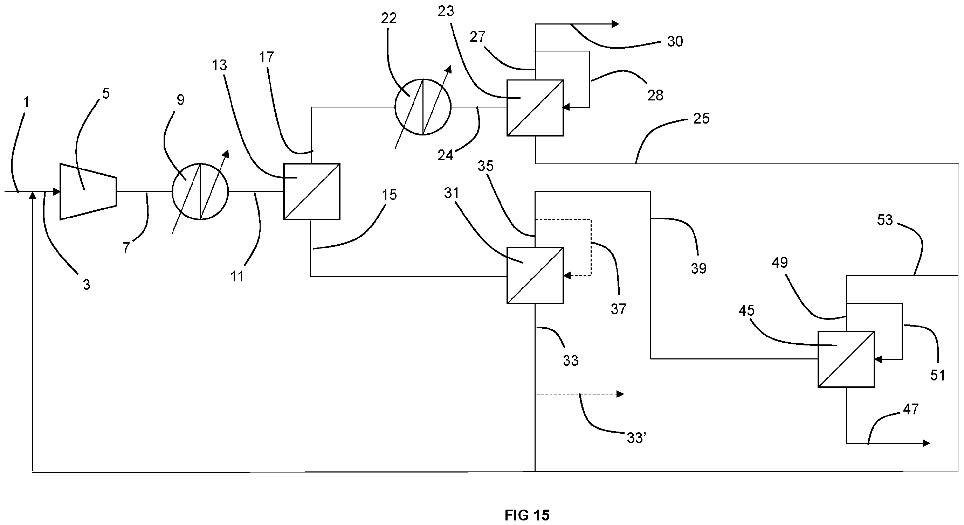

As best illustrated in **FIG 15****,** the feed stage retentate gas stream **21** may be chilled at a second heat exchanger **22** prior to being fed to the retentate stage **23.** The second heat exchanger **22** may optionally be integrated with the first heat exchanger **9.** Additionally, a portion **28** of the retentate stage retentate gas stream **27** may be used as a sweep gas for the retentate stage **23** and the remaining portion **30** recovered as the product gas.

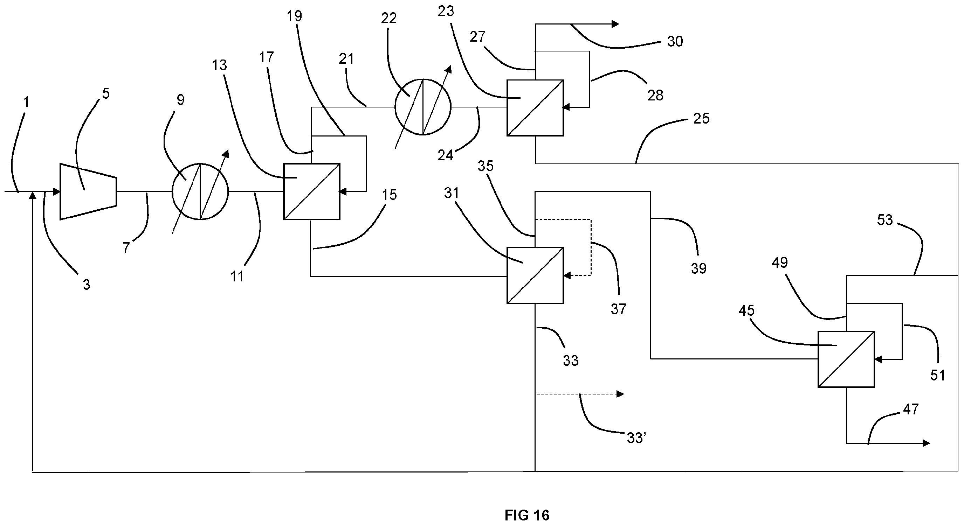

As best shown in **FIG 16****,** the feed stage retentate gas stream **21** may be chilled at a second heat exchanger **22** prior to being fed to the retentate stage **23.** The second heat exchanger **22** may optionally be integrated with the first heat exchanger **9.** Additionally, a portion **28** of the retentate stage retentate gas stream **27** may be used as a sweep gas for the retentate stage **23** and the remaining portion **30** recovered as the product gas. Further, a portion **19** of the feed stage retentate gas stream **17** may be used as a sweep gas for the feed stage **13.**

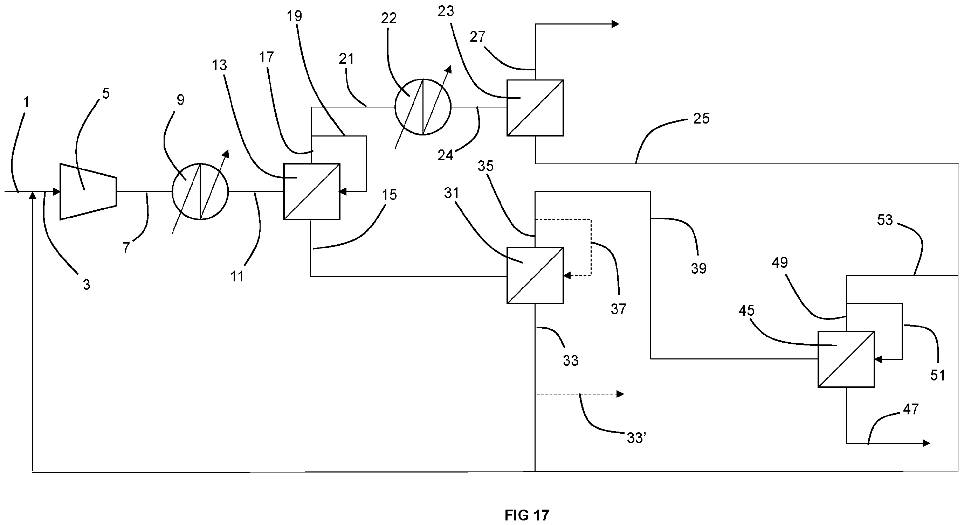

As best illustrated in **FIG 17****,** a portion **19** of the feed stage retentate gas stream **17** may be used as a sweep gas for the feed stage **13.**

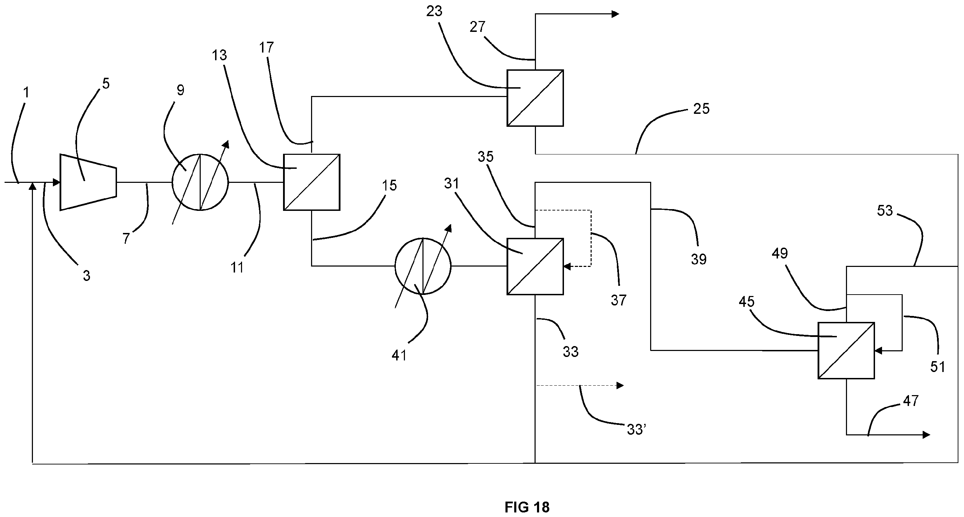

As best shown in **FIG 18****,** the feed stage retentate gas stream **21** may be chilled at a second heat exchanger **22** prior to being fed to the retentate stage **23.**

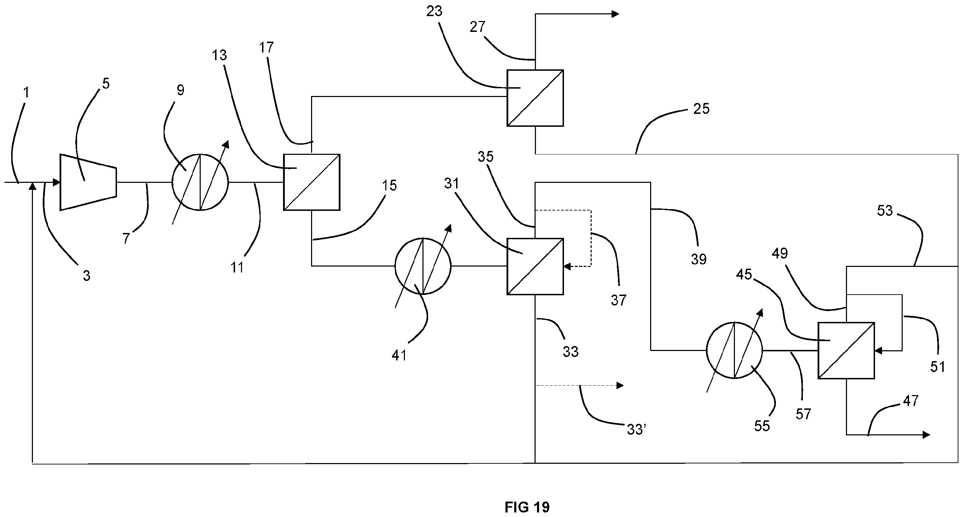

As best illustrated in **FIG 19****,** the feed stage retentate gas stream **21** may be chilled at a second heat exchanger **22** prior to being fed to the retentate stage **23.** Additionally, the first permeate stage retentate gas stream **35** may be chilled at a fourth heat exchanger **55** prior to being fed to the second permeate stage **45.** The second, third and/or fourth heat exchangers **22, 41, 55** may optionally be integrated with the first heat exchanger **9.**

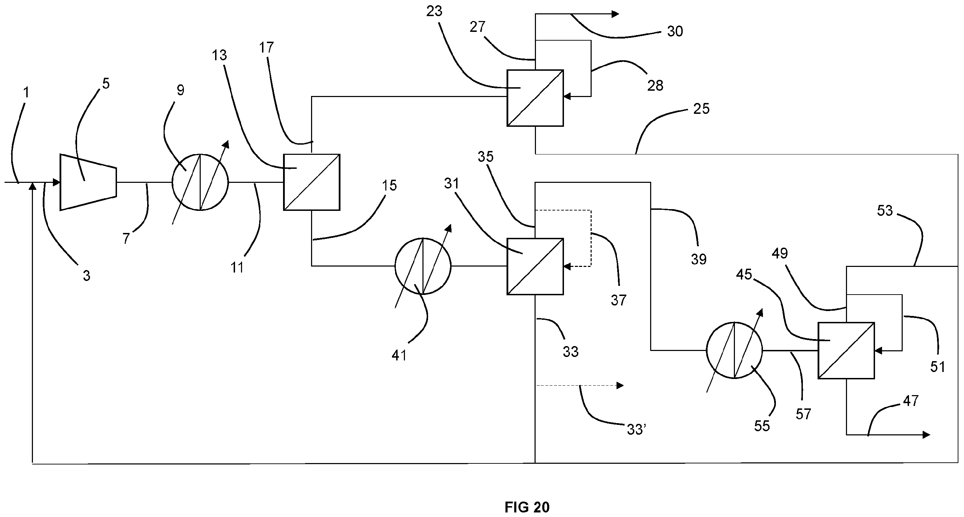

As best shown in **FIG 20****,** the feed stage retentate gas stream **21** may be chilled at a second heat exchanger **22** prior to being fed to the retentate stage **23.** Additionally, the first permeate stage retentate gas stream **35** may be chilled at a fourth heat exchanger **55** prior to being fed to the second permeate stage **45.** The second, third and/or fourth heat exchangers **22, 41, 55** may optionally be integrated with the first heat exchanger **9.** Further, a portion **28** of the retentate stage retentate gas stream **27** may be used as a sweep gas for the retentate stage **23** and the remaining portion **30** recovered as the product gas.

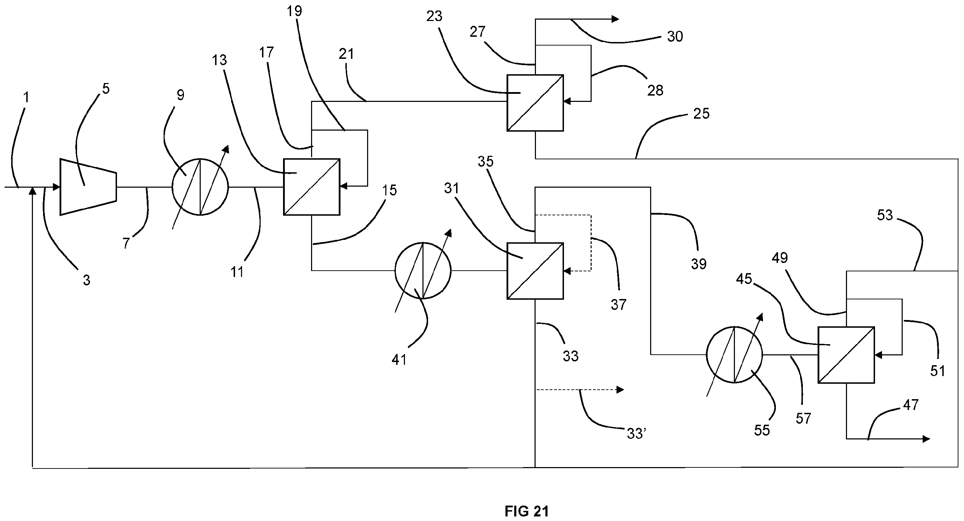

As best illustrated in **FIG 21**, the feed stage retentate gas stream **21** may be chilled at a second heat exchanger **22** prior to being fed to the retentate stage **23.** Additionally, the first permeate stage retentate gas stream **35** may be chilled at a fourth heat exchanger **55** prior to being fed to the second permeate stage **45.** The second, third and/or fourth heat exchangers **22, 41, 55** may optionally be integrated with the first heat exchanger **9.** Further, a portion **28** of the retentate stage retentate gas stream **27** may be used as a sweep gas for the retentate stage **23** and the remaining portion **30** recovered as the product gas. Still further, a portion **19** of the feed stage retentate gas stream **17** may be used as a sweep gas for the feed stage **13.**

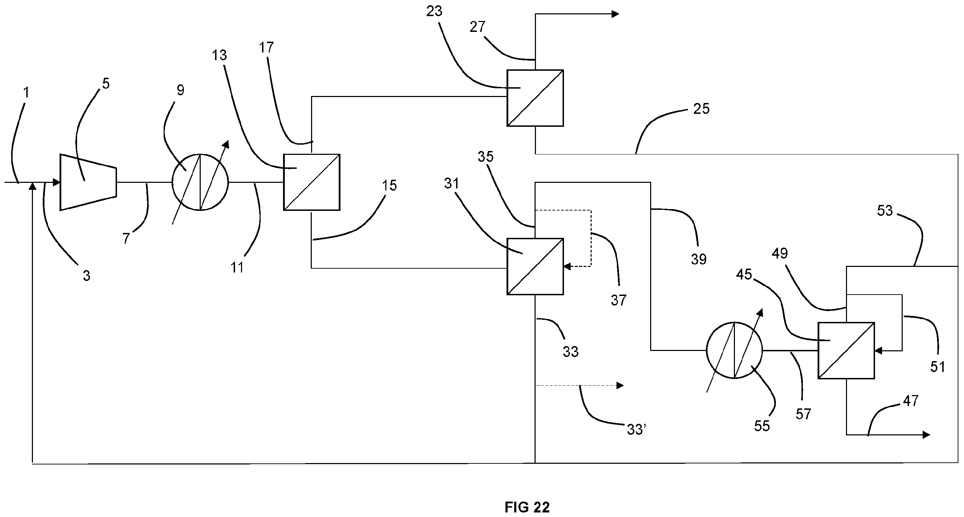

As best shown in **FIG 22**, the first permeate stage retentate gas stream **35** may be chilled at a fourth heat exchanger **55** prior to being fed to the second permeate stage **45.** The second, third and/or fourth heat exchangers **22, 41, 55** may optionally be integrated with the first heat exchanger **9.**

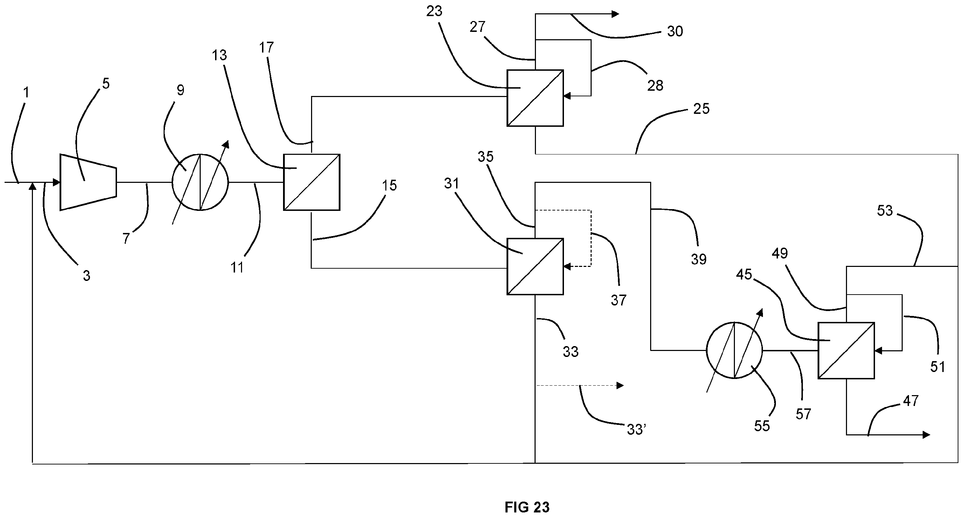

As best illustrated in **FIG 23**, the first permeate stage retentate gas stream **35** may be chilled at a fourth heat exchanger **55** prior to being fed to the second permeate stage **45.** The second, third and/or fourth heat exchangers **22, 41, 55** may optionally be integrated with the first heat exchanger **9.** Additionally, a portion **28** of the retentate stage retentate gas stream **27** may be used as a sweep gas for the retentate stage **23** and the remaining portion **30** recovered as the product gas.

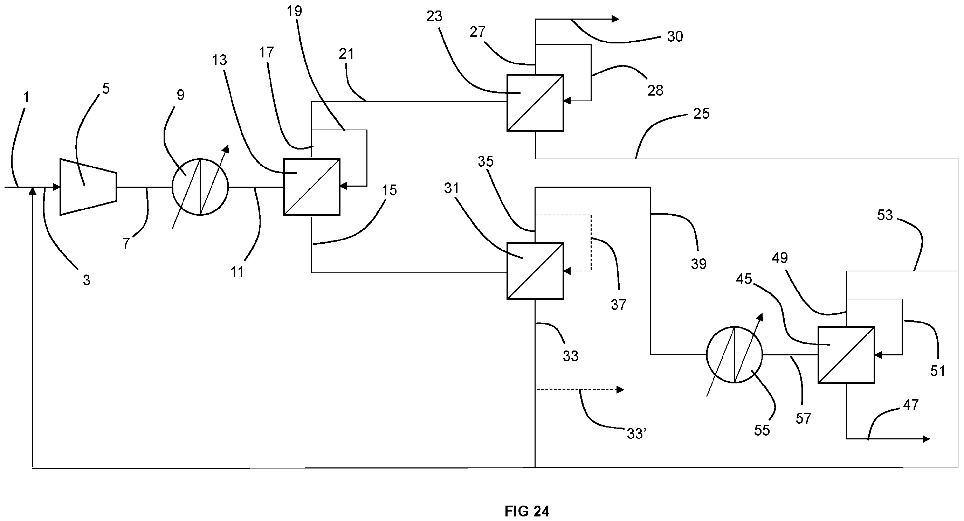

As best shown in **FIG 24**, the first permeate stage retentate gas stream **35** may be chilled at a fourth heat exchanger **55** prior to being fed to the second permeate stage **45.** The second, third and/or fourth heat exchangers **22, 41, 55** may optionally be integrated with the first heat exchanger 9. Additionally, a portion **28** of the retentate stage retentate gas stream **27** may be used as a sweep gas for the retentate stage **23** and the remaining portion **30** recovered as the product gas. Further, a portion **19** of the feed stage retentate gas stream **17** may be used as a sweep gas for the feed stage **13.**

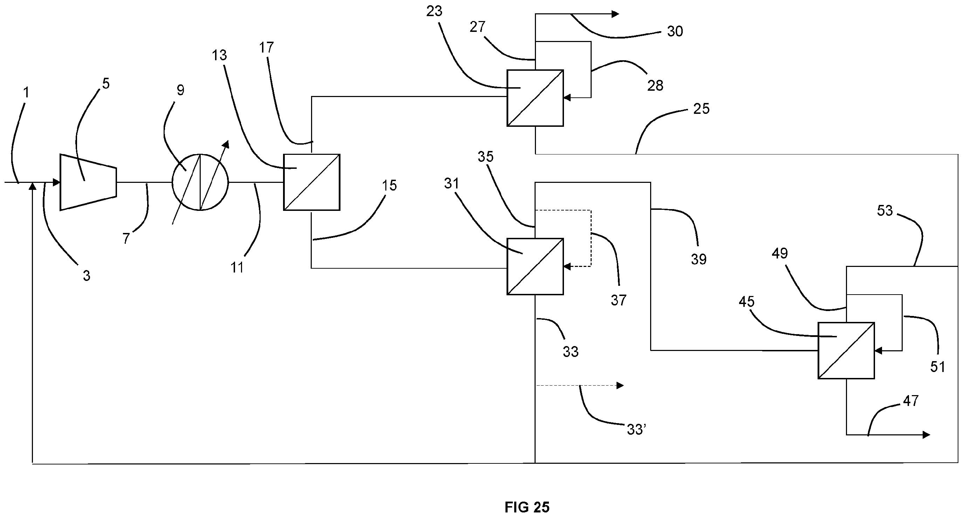

As best illustrated in **FIG 25**, a portion **28** of the retentate stage retentate gas stream **27** may be used as a sweep gas for the retentate stage **23** and the remaining portion **30** recovered as the product gas.

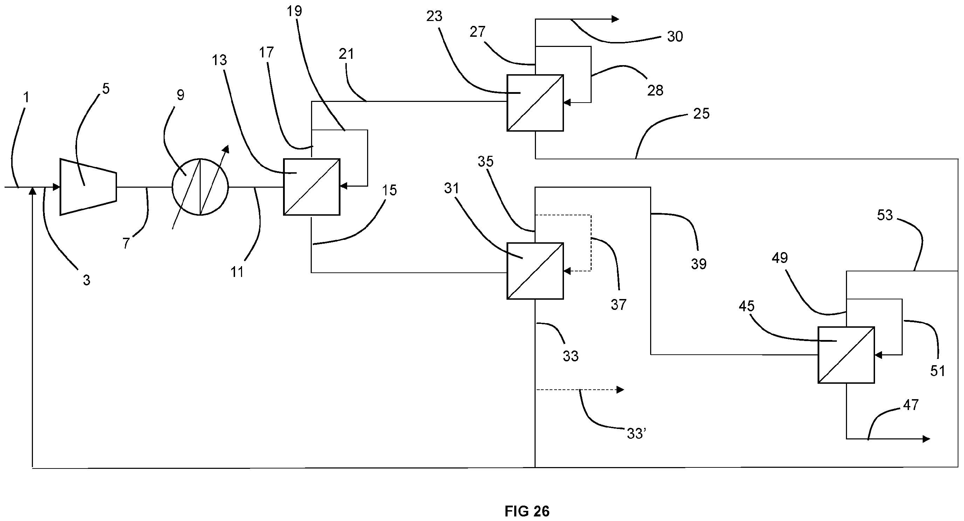

As best shown in **FIG 26****,** a portion **28** of the retentate stage retentate gas stream **27** may be used as a sweep gas for the retentate stage **23** and the remaining portion **30** recovered as the product gas. Additionally, a portion **19** of the feed stage retentate gas stream **17** may be used as a sweep gas for the feed stage **13.**

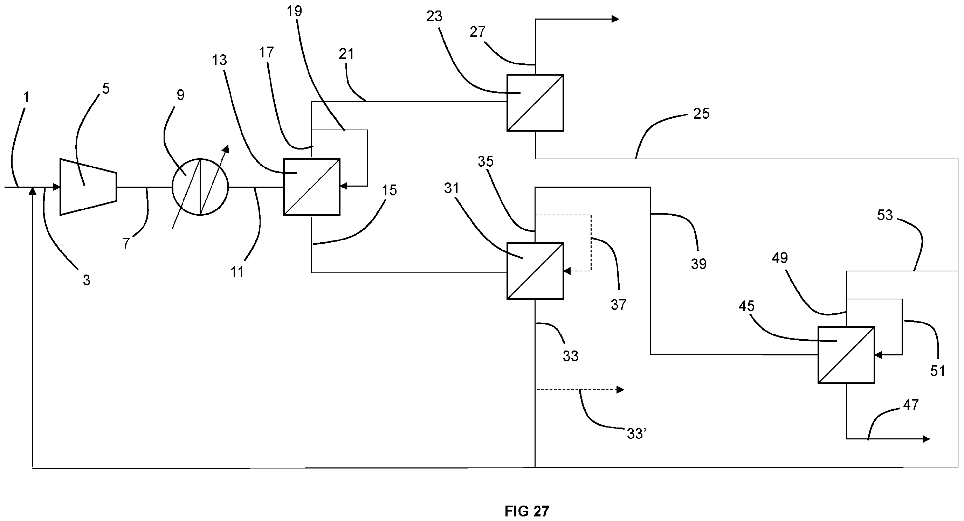

As best illustrated in **FIG 27****,** a portion **28** of the retentate stage retentate gas stream **27** may be used as a sweep gas for the retentate stage **23** and the remaining portion **30** recovered as the product gas. Additionally, a portion **19** of the feed stage retentate gas stream **17** may be used as a sweep gas for the feed stage **13.**

The combined effect of lowering the operating temperature of the polymeric membrane of the feed stage (through cooling the feed gas stream) and sweeping the permeate stage results in an expected advantage when viewed from the perspective of conventional solutions for three-stage separation of a gas mixture. Those skilled in the art understand that high module productivity (i.e., flux of the second gas) and high selectivity (for the second gas over the first gas) are very important for cost-efficient separation of a gas mixture of first gas and a second gas. They would have understood that, while lowering the operating temperature of the polymeric membrane resulted in an increased selectivity (of the second gas over the first gas), the productivity would have been lowered to a level that necessitated an increased membrane surface area (i.e., an increased membrane count). An increased membrane count can render a commercial project economically infeasible. Even though the feed gas stream of the invention is cooled prior to being fed to the feed stage, and by itself would necessitate a higher membrane count, the increased productivity brought about by sweeping the permeate stage more than makes up for the cooling-induced decrease in productivity.

The technical effect of the invention is unexpectedly surprising because those skilled in the art would have rejected such a scheme due to the perceived disadvantage of the loss of recovery of the first gas in the product gas brought about by sweeping the permeate stage with an amount of retentate.

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as fall within the spirit and broad scope of the appended claims. The present invention may suitably comprise, consist or consist essentially of the elements disclosed and may be practiced in the absence of an element not disclosed. Furthermore, if there is language referring to order, such as first and second, it should be understood in an exemplary sense and not in a limiting sense. For example, it can be recognized by those skilled in the art that certain steps can be combined into a single step.

The singular forms "a", "an" and "the" include plural referents, unless the context clearly dictates otherwise.

"Comprising" in a claim is an open transitional term which means the subsequently identified claim elements are a nonexclusive listing i.e. anything else may be additionally included and remain within the scope of "comprising." "Comprising" is defined herein as necessarily encompassing the more limited transitional terms "consisting essentially of" and "consisting of"; "comprising" may therefore be replaced by "consisting essentially of" or "consisting of" and remain within the expressly defined scope of "comprising".

"Providing" in a claim is defined to mean furnishing, supplying, making available, or preparing something. The step may be performed by any actor in the absence of express language in the claim to the contrary.

Optional or optionally means that the subsequently described event or circumstances may or may not occur. The description includes instances where the event or circumstance occurs and instances where it does not occur.

Ranges may be expressed herein as from about one particular value, and/or to about another particular value. When such a range is expressed, it is to be understood that another embodiment is from the one particular value and/or to the other particular value, along with all combinations within said range.

All references identified herein are each hereby incorporated by reference into this application in their entireties, as well as for the specific information for which each is cited.

## Claims

1. A method of separating a gas mixture (1) comprising first and second gases into a first product gas enriched in the first gas and a second product gas enriched in the second gas, said method comprising the steps of:
cooling a feed gas stream (7) at a first heat exchanger (9);
feeding the cooled feed gas stream (11) to a first gas separation membrane module (13), hereinafter referred to as the feed stage, that comprises a pressure vessel, at least one tubesheet, and a polymeric membrane that is selective for the second gas over the first gas, the feed stage (13) being adapted and configured to receive the cooled feed gas stream (11) and produce a feed stage permeate gas stream (15) that is enriched in the second gas compared to the feed gas (7) and a feed stage retentate gas stream (17) that is enriched in the first gas compared to the feed gas (7);
withdrawing, from the feed stage (13), the feed stage permeate gas stream (15) and the feed stage retentate gas stream (17);
feeding the feed stage retentate gas stream (17) to a second gas separation membrane module (23), hereinafter referred to as the retentate stage, that comprises a pressure vessel, at least one tubesheet, and a polymeric membrane that is selective for the second gas over the first gas, the retentate stage (23) being adapted and configured to receive the remaining portion of the feed stage retentate gas stream (17) and produce a retentate stage permeate gas stream (25) that is enriched in the second gas compared to the feed stage retentate gas stream (17) and a retentate stage retentate gas stream (27) that is enriched in the first gas compared to the feed stage retentate gas stream (17);
withdrawing, from the retentate stage (23), the retentate stage permeate gas stream (25) and the retentate stage retentate gas stream (27);
recovering at least a portion of the retentate stage retentate gas stream (27) as the first product gas;
feeding the feed stage permeate gas stream (15) to a third gas separation membrane modules (31), hereinafter referred to as the first permeate stage, that comprises a pressure vessel, at least one tubesheet, and a polymeric membrane that is selective for the second gas over the first gas, the first permeate stage (31) being adapted and configured to receive the feed stage permeate gas stream (15) and produce a first permeate stage permeate gas stream (33) that is enriched in the second gas compared to the feed stage permeate gas stream (15) and a first permeate stage retentate gas stream (35) that is enriched in the first gas compared to the feed stage permeate gas stream (15);
withdrawing, from the first permeate stage (31), the first permeate stage retentate gas stream (35) and the first permeate stage permeate gas stream (33);
feeding the first permeate stage retentate gas (35) to a fourth gas separation membrane module (45), hereinafter referred to as the second permeate stage, that comprises a pressure vessel, at least one tubesheet, and a polymeric membrane that is selective for the second gas over the first gas, the second permeate stage (45) being adapted and configured to receive the first permeate stage retentate gas stream (35) and produce a second permeate stage permeate gas stream (47) that is enriched in the second gas compared to the first permeate stage retentate gas stream (35) and a second permeate stage retentate gas stream (49) that is enriched in the first gas compared to the first permeate stage retentate gas stream (35);
feeding a portion (51) of the second permeate stage retentate gas stream (49) to a permeate side of the second permeate stage (45) as a sweep gas;
combining and compressing a stream of the gas mixture (1), the retentate stage permeate gas stream (25) and a remaining portion (53) of the second permeate stage retentate gas stream (49), the feed gas stream (7) being comprised of the compressed and combined streams of the gas mixture (1), the retentate stage permeate gas (25), and the remaining portion (53) of the second permeate stage retentate gas stream (49), wherein the second permeate stage permeate gas stream (47) is either vented or is recovered as the second product gas, optionally after further treatment to remove one or more impurities therefrom.

2. The method of claim 1, wherein the feed stage retentate gas stream (17) is cooled at a second heat exchanger (22) before being fed to the retentate stage (23).

3. The method of claim 1 or claim 2, wherein the feed stage permeate gas stream (15) is cooled at a third heat exchanger (41) before being fed to the first permeate stage (31).

4. The method of any one of the preceding claims, wherein the first permeate stage retentate gas stream (35) is cooled at a fourth heat exchanger (55) before being fed to the second permeate stage (45).

5. The method of any one of the preceding claims, wherein a portion (28) of the withdrawn retentate stage retentate gas stream (27) is not recovered as the first product gas but is instead used as a sweep gas at the retentate stage (23).

6. The method of any one of the preceding claims, wherein a portion (19) of the withdrawn feed stage retentate gas stream (17) is not fed to the retentate stage (23) but is instead used as a sweep gas at the feed stage (13).

7. The method of any one of the preceding claims, wherein the first permeate stage permeate gas stream (33) is also combined and compressed with the stream of the gas mixture (1), the retentate stage permeate gas stream (25) and the remaining portion (53) of the second permeate stage retentate gas stream (49), the feed gas stream (7) being comprised of the compressed and combined streams of the first permeate stage permeate gas stream (33), the gas mixture (1), the retentate stage permeate gas stream (25), and the remaining portion (53) of the second permeate stage retentate gas stream (49).

8. The method of any one of the preceding claims, wherein the first permeate stage permeate gas stream (33) is either vented or is recovered, with the second permeate stage permeate gas stream (47), as the second product gas, optionally after further treatment to remove one or more impurities therefrom, and a portion (51) of the second permeate stage retentate gas stream (49) is fed to a permeate side of the second permeate stage (45) as a sweep gas.

9. The method of any one of the preceding claims, wherein the gas mixture (1) is biogas comprising 50 to 70 vol% of methane and 20 to 50 vol% carbon dioxide, the first gas is methane, and the second gas is carbon dioxide.

10. The method of any one of the preceding claims, further comprising the step of removing one or more impurities from the gas mixture (1) using PSA, TSA, or TPSA, wherein the first and/or second permeate stage permeate gas stream (33', 47), diluted with the portion (37, 51) of the first and/or second permeate stage retentate gas stream (35, 49) used as a sweep gas, is used as regeneration gas at the PSA, TSA, or TPSA.

11. The method of claim 10, further comprising the steps of withdrawing the regeneration gas from the PSA, TSA, or TPSA, thermally oxidizing the withdrawn regeneration gas at a thermal oxidizer, and venting the thermally oxidized regeneration gas from the thermal oxidizer.

12. A system of separating a gas mixture (1) comprising first and second gases into a first product gas enriched in the first gas and a second product gas enriched in the second gas, comprising:
a first heat exchanger (9) adapted and configured to cool a feed gas stream (7);
a first gas separation membrane module (13), hereinafter referred to as the feed stage, operatively associated with the first heat exchanger (9) that comprises a pressure vessel, at least one tubesheet, and a polymeric membrane that is selective for the second gas over the first gas, the feed stage (13) being adapted and configured to receive a cooled feed gas stream (11) from the first heat exchanger (9) and produce a feed stage permeate gas stream (15) that is enriched in the second gas compared to the feed gas (7) and a feed stage retentate gas stream (17) that is enriched in the first gas compared to the feed gas (7);
withdrawing, from the feed stage (13), the feed stage permeate gas stream (15) and the feed stage retentate gas stream (17);
a second gas separation membrane module (23), hereinafter referred to as the retentate stage, operatively associated with the feed stage (13) that comprises a pressure vessel, at least one tubesheet, and a polymeric membrane that is selective for the second gas over the first gas, the retentate stage (23) being adapted and configured to receive a remaining portion of the feed stage retentate gas stream (17) and produce a retentate stage permeate gas stream (25) that is enriched in the second gas compared to the feed stage retentate gas stream (17) and a retentate stage retentate gas stream (27) that is enriched in the first gas compared to the feed stage retentate gas stream (17), wherein at least a portion of the retentate stage retentate gas stream (27) is recovered as the first product gas;
a third gas separation membrane module (31), hereinafter referred to as the first permeate stage, operatively associated with the feed stage (13) that comprises a pressure vessel, at least one tubesheet, and a polymeric membrane that is selective for the second gas over the first gas, the first permeate stage (31) being adapted and configured to receive the feed stage permeate gas stream (15) and produce a first permeate stage permeate gas stream (33) that is enriched in the second gas compared to the feed stage permeate gas stream (15) and a first permeate stage retentate gas stream (35) that is enriched in the first gas compared to the feed stage permeate gas stream (15);
a fourth gas separation membrane module (45), hereinafter referred to as the second permeate stage, operatively associated with the first permeate stage (31) that comprises a pressure vessel, at least one tubesheet, and a polymeric membrane that is selective for the second gas over the first gas, the second permeate stage (45) being adapted and configured to receive the first permeate stage retentate gas stream (35) and produce a second permeate stage permeate gas stream (47) that is enriched in the second gas compared to the first permeate stage retentate gas stream (35) and a second permeate stage retentate gas stream (49) that is enriched in the first gas compared to the first permeate stage retentate gas stream (35), wherein a portion (51) of the second permeate stage retentate gas stream (49) is fed to a permeate side of the second permeate stage (45) as a sweep gas; and
a compressor (5) in operative association with the retentate stage (23), the second permeate stage (45), and the feed stage (13), the compressor (5) being adapted and configure to combine, and compress a stream of the gas mixture (1), the retentate stage permeate gas stream (25), and a remaining portion (53) of the second permeate stage retentate gas stream (49), wherein the feed gas stream (7) is comprised of the compressed and combined streams of the gas mixture (1), the retentate stage permeate gas (25), and the remaining portion (53) of the second permeate stage retentate gas stream (49), and the second permeate stage permeate gas stream (47) is either vented or is recovered as the second product gas, optionally after further treatment to remove one or more impurities therefrom.

13. The system of claim 12, wherein feed stage retentate gas stream (17) is cooled at a second heat exchanger (22) before being fed to the retentate stage (23).

14. The system of claim 12 or claim 13, wherein the feed stage permeate gas stream (15) is cooled at a third heat exchanger (41) before being fed to the first permeate stage (31).

15. The system of any one of claims 12 to 14, wherein the first permeate stage retentate gas stream (35) is cooled at a fourth heat exchanger (55) before being fed to the second permeate stage (45).

16. The system of any one of claims 12 to 15, wherein a portion (28) of the withdrawn retentate stage retentate gas stream (27) is not recovered as the first product gas but is instead used as a sweep gas at the retentate stage (23).

17. The system of any one of claims 12 to 16, wherein a portion (15) of the withdrawn feed stage retentate gas stream (17) is not fed to the retentate stage but is instead used as a sweep gas at the feed stage (13).

18. The system of any one of claims 12 to 17, wherein the first permeate stage permeate gas stream (33) is also combined and compressed with the stream of the gas mixture (1), the retentate stage permeate gas stream (25) and the remaining portion (53) of the second permeate stage retentate gas stream (49), the feed gas stream (7) being comprised of the compressed and combined streams of the first permeate stage permeate gas stream (33), the gas mixture (1), the retentate stage permeate gas (25), and the remaining portion (53) of the second permeate stage retentate gas stream (49).

19. The system of any one of claims 12 to 18, wherein the first permeate stage permeate gas stream (33) is either vented or is recovered, with the second permeate stage permeate gas stream (47), as the second product gas, optionally after further treatment to remove one or more impurities therefrom, and a portion (51) of the second permeate stage retentate gas stream (49) is fed to a permeate side of the second permeate stage (45) as a sweep gas.
